(19) Europäisches Patentamt
European Patent Office
Office européen des brevets

(11) **EP 4 643 980 A1**

(12) **EUROPEAN PATENT APPLICATION**
published in accordance with Art. 153(4) EPC

(43) Date of publication:
**05.11.2025 Bulletin 2025/45**

(21) Application number: **23912136.1**

(22) Date of filing: **26.12.2023**

(51) International Patent Classification (IPC):
**B01D 61/22** *(2006.01)* **B01D 61/14** *(2006.01)*
**B01D 63/02** *(2006.01)* **B01D 69/00** *(2006.01)*
**B01D 69/02** *(2006.01)* **B01D 69/08** *(2006.01)*

(52) Cooperative Patent Classification (CPC):
**B01D 61/14; B01D 61/22; B01D 63/02;
B01D 69/00; B01D 69/02; B01D 69/08**

(86) International application number:
**PCT/JP2023/046654**

(87) International publication number:
**WO 2024/143357 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2022 JP 2022210709**

(71) Applicant: **Toray Industries, Inc.
Tokyo 103-8666 (JP)**

(72) Inventors:
• **KOBAYASHI, Kentaro
Otsu-shi, Shiga 520-8558 (JP)**

• **SHIMURA, Shun
Otsu-shi, Shiga 520-8558 (JP)**
• **KOZAKI, Yoichiro
Otsu-shi, Shiga 520-8558 (JP)**
• **TACHIBANA, Takashi
Otsu-shi, Shiga 520-8558 (JP)**
• **KANAMORI, Satoko
Otsu-shi, Shiga 520-8558 (JP)**

(74) Representative: **Hoefer & Partner Patentanwälte
mbB
Pilgersheimer Straße 20
81543 München (DE)**

(54) **METHOD FOR PRODUCING CONCENTRATED LIQUID OF STOCK SOLUTION**

(57) The present invention addresses the problem of providing a method that is for producing a concentrated solution of a stock solution using an ultrafiltration membrane, and that increases the recovery rate of useful components intended to be concentrated. The present invention pertains to a method for producing a concentrated solution of a stock solution using an ultrafiltration membrane, and involves, when A/B which is the ratio of the molecular weight cut-off (MWCO) A of the ultrafiltration membrane with respect to the weight-average molecular weight (Mw) B of a solute in the stock solution is 0.05-0.30, filtering the stock solution through the ultrafiltration membrane at a transmembrane pressure higher than or equal to the critical pressure of the ultrafiltration membrane.

*FIG. 2*

FILTRATION FLUX — TRANSMEMBRANE PRESSURE (with Jmax and TMPc indicated)

# EP 4 643 980 A1

## Description

### TECHNICAL FIELD

The present invention relates to a method for producing a concentrated liquid of a raw liquid using an ultrafiltration membrane.

### BACKGROUND ART

In recent years, membrane filtration using a separation membrane has been widely applied to various fields such as a fermentation field involving culture of microorganisms and cultured cells, a pharmaceutical field, and a food and drink field, in addition to a water treatment field such as drinking water production, water purification treatment, and wastewater treatment. Among separation membranes, membrane filtration using a hollow fiber membrane module is used in many fields in view of an amount of water treated, ease of cleaning, and the like.

In the water treatment field, a separation membrane is used to reject impurities contained in a raw liquid and obtain a clear filtrate. Meanwhile, in a fermentation field, a pharmaceutical field, and a food and drink field, a separation membrane is also used to reject useful substances contained in a raw liquid and extract a filtrate containing impurities, thereby concentrating and purifying the useful substances contained in the raw liquid.

In such concentration and purification using a separation membrane, a relation between a molecular weight of a component to be concentrated and a molecular weight cut-off of the separation membrane is important. Especially, when it is desired to concentrate all useful substances contained in a raw liquid, a separation membrane having a molecular weight cut-off sufficiently smaller than molecular weights of the useful substances is used.

Patent Literature 1 discloses a method for treating thickened polysaccharide-containing water, which can perform membrane treatment to reduce a TOC component in the thickened polysaccharide-containing water while preventing fouling. It is disclosed that a separation membrane having a molecular weight cut-off of less than 50,000 Da is used to prevent a TOC concentration of an ultrafiltration membrane permeate from becoming high.

Patent Literature 2 discloses a method for producing a scallop extract having rich feeling and flavor, a strong aroma, and high transparency by fractionating the scallop extract obtained by concentrating scallop broth through a membrane treatment. It is disclosed that polymer components with a molecular weight distribution of 100 kDa to 1500 kDa are rejected by a separation membrane with a molecular weight cut-off of 100 kDa or less.

### CITATION LIST

### PATENT LITERATURE

Patent Literature 1: JP2018-103119A
Patent Literature 2: JP2022-54198A

### SUMMARY OF INVENTION

### TECHNICAL PROBLEM

It is difficult to always select a separation membrane with an optimal molecular weight cut-off for concentrating and purifying the useful substance depending on the molecular weight of the useful substance to be concentrated, and in some cases, a separation membrane with a molecular weight cut-off relatively suited to an application thereof is selected from commercially available separation membranes.

When a separation membrane having a molecular weight cut-off greater than the minimum molecular weight of the component to be concentrated is used, the useful component to be concentrated may leak to the filtrate side. On the other hand, Patent Literatures 1 and 2 disclose the use of a separation membrane having a molecular weight cut-off smaller than the useful component to be concentrated, and while the target useful component can be sufficiently rejected, a membrane having a molecular weight cut-off that is too small may result in low filtration flux. None of the patents discloses a method for preventing leakage of the useful component to be concentrated to the filtrate side when using a separation membrane with a molecular weight cut-off greater than the minimum molecular weight of the component to be concentrated.

Therefore, an object of the present invention is to provide a method for producing a concentrated liquid of a raw liquid using an ultrafiltration membrane as a separation membrane, which increases a recovery rate of a useful component to be concentrated.

SOLUTION TO PROBLEM

In order to achieve the above object, the present invention provides the following method for producing a concentrated liquid of a raw liquid.

<1> A method for producing a concentrated liquid of a raw liquid using an ultrafiltration membrane, the method including:
filtering the raw liquid through the ultrafiltration membrane at a transmembrane pressure equal to or higher than a critical pressure of the ultrafiltration membrane when A/B is 0.05 or more and 0.30 or less, provided that A is a molecular weight cut-off (MWCO) of the ultrafiltration membrane and B is a weight average molecular weight (Mw) of a solute in the raw liquid.
<2> The method for producing a concentrated liquid according to <1>, in which
the weight average molecular weight (Mw) B of the solute in the raw liquid is a weight average molecular weight of a component having a molecular weight of 1,000 Da or more.
<3> The method for producing a concentrated liquid according to <1> or <2>, in which
a concentration of the solute in the raw liquid is 0.1 mass% or more.
<4> The method for producing a concentrated liquid according to any one of <1> to <3>, in which
the weight average molecular weight (Mw) B of the solute in the raw liquid is 30,000 Da or more and 1,000,000 Da or less.
<5> The method for producing a concentrated liquid according to any one of <1> to <4>, in which
the molecular weight cut-off (MWCO) A of the ultrafiltration membrane is 5,000 Da or more and 300,000 Da or less, and the filtration is performed at a transmembrane pressure of 50 kPa or more and 200 kPa or less.
<6> The method for producing a concentrated liquid according to any one of <1> to <5>, in which
the ultrafiltration membrane is an external pressure type hollow fiber membrane whose outer surface is in contact with the raw liquid.
<7> The method for producing a concentrated liquid according to <6>, in which

an effective length of a hollow fiber membrane module is 0.5 m or more and 1.5 m or less as a length of the hollow fiber membrane, and
when the hollow fiber membrane is loaded in the hollow fiber membrane module, a transmembrane pressure at a filtrate outlet side end of the hollow fiber membrane module is equal to or greater than the critical pressure of the ultrafiltration membrane.

<8> The method for producing a concentrated liquid according to <6> or <7>, in which

the filtration is cross flow filtration, and
when a ratio of a viscosity $\mu_f$ of the raw liquid to a viscosity $\mu_p$ of a filtrate after the raw liquid is filtered satisfies $\mu_f/\mu_p \geq 1.5$, the filtration is operated such that a flow velocity ratio of a flow velocity $v_p$ of the filtrate to a flow velocity $v_f$ of the raw liquid satisfies $0.02 \leq v_p/v_f \leq 0.30$.

<9> The method for producing a concentrated liquid according to any one of <6> to <8>, in which

a pore diameter D of the outer surface of the hollow fiber membrane is 5 nm or more and 20 nm or less, and a ratio C/D of a pore diameter C of an inner surface of the hollow fiber membrane to the pore diameter D of the outer surface is greater than 50.

ADVANTAGEOUS EFFECTS OF INVENTION

According to the present invention, in the method for producing a concentrated liquid of a raw liquid using an ultrafiltration membrane, it is possible to increase a recovery rate of a useful component to be concentrated.

BRIEF DESCRIPTION OF DRAWINGS

FIG. 1 is a schematic diagram illustrating one embodiment of a filtration unit to which a method for producing a concentrated liquid of the present invention can be applied.

FIG. 2 is a schematic diagram illustrating a relation between a transmembrane pressure and a filtration flux in an ultrafiltration membrane.

FIG. 3 is a schematic diagram illustrating one mode of a hollow fiber membrane module in which hollow fiber membranes are loaded.

FIG. 4 is a schematic diagram illustrating one mode of viscosity measurement using a capillary viscometer.

DESCRIPTION OF EMBODIMENTS

Hereinafter, an embodiment of the present invention will be described in detail with reference to the drawings, but the present invention is not limited in any way thereto.

The present invention relates to a method for producing a concentrated liquid of a raw liquid using an ultrafiltration membrane. Producing a concentrated liquid of a raw liquid means rejecting a component contained in the raw liquid with an ultrafiltration membrane and extracting a solvent such as water and impurities as a filtrate. To concentrate the component contained in the raw liquid using an ultrafiltration membrane, it is common to use an ultrafiltration membrane having a molecular weight cut-off smaller than a molecular weight of the component contained in the raw liquid.

The method for producing a concentrated liquid of a raw liquid according to an embodiment of the present invention (hereinafter also referred to as "the present embodiment") is a method for producing a concentrated liquid of a raw liquid using an ultrafiltration membrane, and includes filtering the raw liquid through the ultrafiltration membrane at a transmembrane pressure equal to or higher than a critical pressure of the ultrafiltration membrane when a ratio A/B of a molecular weight cut-off (hereinafter also referred to as "MWCO") A of the ultrafiltration membrane to a weight average molecular weight (hereinafter also referred to as "Mw") B of a solute in the raw liquid, is 0.05 or more and 0.30 or less.

There are various definitions for ultrafiltration membranes, but in the present embodiment, it is preferable that the ultrafiltration membrane is a separation membrane having a molecular weight cut-off (MWCO) of 1,000 Da or more and a pore diameter of less than 0.1 $\mu$m.

The molecular weight cut-off (MWCO) is a molecular weight that can be rejected by the separation membrane, and is disclosed as a nominal molecular weight cut-off by each separation membrane manufacturer. The molecular weight cut-off (MWCO) is often defined as the smallest molecular weight of molecular weights of components contained in the raw liquid that can be rejected by 90% or more by the separation membrane. Although a method for measuring the molecular weight cut-off varies depending on each manufacturer, in the present specification, the nominal molecular weight cut-off disclosed by each manufacturer is taken as the molecular weight cut-off.

The pore diameter is a diameter of a pore present in a surface of the separation membrane when the surface thereof is observed. The surface of the separation membrane is a surface that is in contact with the raw liquid. The pore diameter is also disclosed as a nominal pore diameter by each separation membrane manufacturer. As the molecular weight cut-off, a method for measuring the pore diameter varies depending on each manufacturer, but in the present specification, a nominal pore diameter disclosed by each manufacturer is taken as the pore diameter. For separation membranes for which the molecular weight cut-off or pore diameter is not disclosed, values measured by methods described below are taken.

The raw liquid contains, for example, a solvent, a solute, and suspended particles, and compositions thereof are not particularly limited. The suspended particles are particle components that are captured by a filter with a pore diameter of, for example, 0.45 $\mu$m, and have a size that can be easily rejected by the ultrafiltration membrane, and therefore, it is preferable not to include the suspended particles in calculation of the weight average molecular weight in the present embodiment. In the present embodiment, the weight average molecular weight to be calculated is preferably a weight average molecular weight of the solute dissolved in the solvent, and more preferably a weight average molecular weight of a useful component to be concentrated.

The solvent is not particularly limited, and water or various organic solvents can be used, and from the viewpoint of durability of the ultrafiltration membrane, it is preferable that a main component of the solvent is water.

The solute is not particularly limited as long as the solute contains a polymer component, which is a target to be concentrated, having a molecular weight greater than the molecular weight cut-off of the ultrafiltration membrane, and in addition to the polymer component, the solute may also contain low molecular weight organic substances and inorganic substances such as salts. Examples of the polymer component include natural polymers such as proteins, nucleic acids, and polysaccharides, and synthetic polymers such as nylon and polyethylene. Among these, natural polymers that are easily soluble in water or hydrophilic synthetic polymers are suitable as the solute in the present embodiment.

From the viewpoint of reducing a load on the ultrafiltration membrane, it is preferable that the suspended particles are removed in a pretreatment stage, but the suspended particles may be contained in the raw liquid.

When the solute in the raw liquid to be concentrated is a polymer, the polymer has a molecular weight distribution, and therefore, when concentrating all of the solute, it is considered that an ultrafiltration membrane with a molecular weight cut-off equal to the molecule with the smallest molecular weight distribution will be appropriate. However, when selecting from commercially available ultrafiltration membranes, it is rare to be able to select such an ultrafiltration membrane, and basically an ultrafiltration membrane with a molecular weight cut-off smaller than the molecule with the smallest molecular weight distribution is selected.

In this case, the components to be concentrated are almost entirely concentrated, but there is a disadvantage in that a filtration flux is low due to the small molecular weight cut-off. Conversely, if the filtration flux is desired to be increased, an ultrafiltration membrane with a larger molecular weight cut-off is to be selected, but if an ultrafiltration membrane with a molecular weight cut-off larger than the molecule with the smallest molecular weight distribution is selected, some of the components to be concentrated may leak.

In an effort to solve this problem, the inventors have found, through diligent research, that when A/B (MWCO/Mw), which is a ratio of a molecular weight cut-off (MWCO) A of the ultrafiltration membrane to a weight average molecular weight (Mw) B of the solute in the raw liquid, is 0.05 or more and 0.30 or less, a rejection rate can be improved by performing the filtration at a transmembrane pressure equal to or higher than the critical pressure of the ultrafiltration membrane, thereby obtaining the invention of the present application. Note that in the present specification, the rejection rate is an index showing an extent to which the solute, which is the component to be concentrated, is rejected by the ultrafiltration membrane, and is calculated from a solute concentration of the raw liquid and a solute concentration of a filtrate by a method described below in "Rejection Rate Measurement Test".

The weight average molecular weight (Mw) is an average molecular weight calculated from the molecular weight distribution by the following Formula (1). Here, $M_i$ and $N_i$ mean that there are $N_i$ molecules with a molecular weight of $M_i$.
[Math. 1]

$$Mw = \Sigma(M_i^2 \times N_i)/\Sigma(M_i \times N_i) \cdots (1)$$

The molecular weight distribution can be measured by liquid chromatography called gel permiation chromatography (GPC) or size exclusion chromatography (SEC) (hereafter, the name of the method will be unified to the GPC method). In the GPC method, types of the solvent and a column differ depending on the solute, and therefore, the measurement can be carried out by appropriately selecting a solvent and a column suitable for the solute. Note that in the present specification, the molecular weight distribution is measured by a method described below in "Method for Measuring Weight Average Molecular Weight".

When concentrating a solute in the raw liquid using an ultrafiltration membrane, an ultrafiltration membrane having a molecular weight cut-off (MWCO) smaller than the weight average molecular weight (Mw) of the solute is generally selected. That is, in principle, the ultrafiltration membrane is required to satisfy the following Formula (2).
[Math. 2]

$$MWCO/Mw < 1 \cdots (2)$$

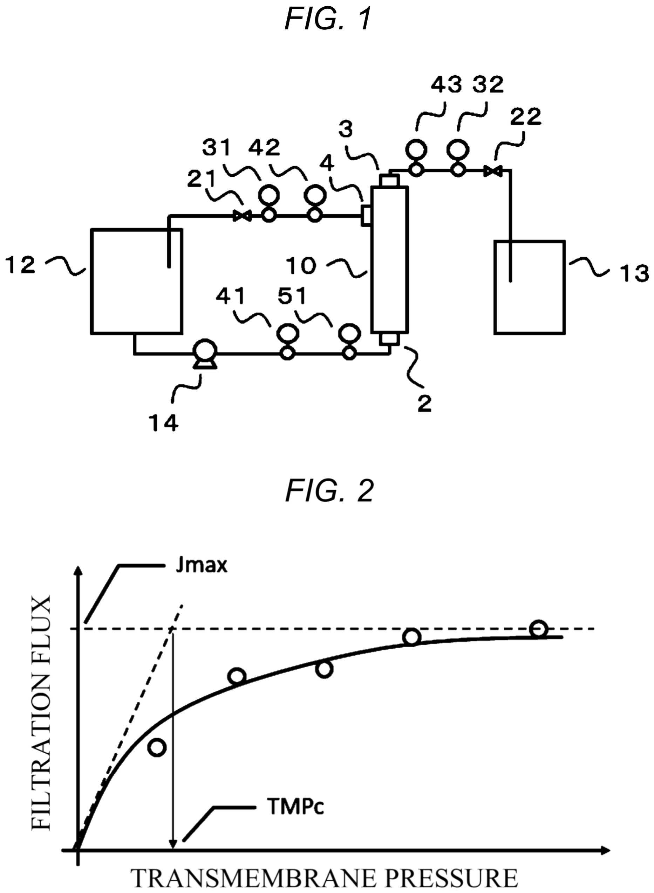

Next, the critical pressure will be described with reference to FIG. 1 and FIG. 2. FIG. 1 is a schematic diagram illustrating one mode of a filtration unit to which the method for producing a concentrated liquid of the present embodiment is applied, and FIG. 2 is a schematic diagram showing a relation between the transmembrane pressure (hereinafter also referred to as "TMP") in the ultrafiltration membrane and the filtration flux (J).

Hereinafter, a method for concentrating the raw liquid by cross flow filtration will be described using an apparatus illustrated in FIG. 1 as an example, but the present embodiment is not limited to cross flow filtration.

In cross flow filtration, the raw liquid is supplied from a raw liquid tank 12 to a hollow fiber membrane module 10 through a raw liquid inlet 2 by a supply pump 14, and is separated into a concentrated liquid and a filtrate in the hollow fiber membrane module 10, and the concentrated liquid passes through a raw liquid outlet 4 and then is supplied to the raw liquid tank 12, and the filtrate passes through a filtrate outlet 3 and then is supplied to a filtrate tank 13. Pressures before and after the ultrafiltration membrane are measured by a raw liquid pressure gauge 41, a concentrated liquid pressure gauge 42 and a filtrate pressure gauge 43, and flow rates before and after the ultrafiltration membrane are measured by a concentrated liquid flowmeter 31 and a filtrate flowmeter 32.

The transmembrane pressure (TMP) is a pressure applied to the ultrafiltration membrane when filtering the raw liquid, and is obtained by subtracting a filtrate side pressure $P_p$ from a raw liquid side pressure $P_f$, and is expressed by the following Formula (3).
[Math. 3]

$$TMP = P_f - P_p \cdots (3)$$

In the case of cross flow filtration, the raw liquid side pressure $P_f$ is an average value of values indicated by the raw liquid pressure gauge 41 and the concentrated liquid pressure gauge 42, and the filtrate side pressure $P_p$ is a value indicated by the filtrate pressure gauge 43. If there is a water head difference between the pressure gauges, the TMP is calculated after subtracting the water head difference.

The filtration flux (J) is a filtrate flow rate V per membrane area A of the ultrafiltration membrane, and is expressed by the following Formula (4).

[Math. 4]

$$J=V/A \cdots (4)$$

A general relation between the filtration flux (J) and the TMP is illustrated in FIG. 2. Points indicated by circles in FIG. 2 are actual measured values, and a solid line is a plot of an approximation obtained by fitting the following Formula (5) to the actual measured values.

[Math. 5]

$$J=J_{max}(1\text{-}exp(K \times TMP)) \cdots (5)$$

Here, $J_{max}$ is a maximum value of the filtration flux J, which is a so-called limiting flux. K is a fitting coefficient. Data of K is a plot of the filtration flux (J) when a flow velocity of the raw liquid (= raw liquid flow rate/flow channel area) is kept constant and the TMP is changed.

When a polymer component is filtered with the ultrafiltration membrane, it is known that the filtration flux does not increase even when the TMP is increased, as illustrated in FIG. 2. This is because, a concentration of the rejected polymer component increases on a surface of the ultrafiltration membrane, that is, so-called concentration polarization occurs, which increases an osmotic pressure difference between the raw liquid side and the filtrate side of the ultrafiltration membrane. To perform filtration, it is necessary to apply a pressure greater than this osmotic pressure difference. As the filtration flux increases, the concentration polarization progresses and the osmotic pressure difference increases, and therefore, the filtration flux does not increase even when the TMP is increased.

The critical pressure is a pressure at which a rate of increase of the filtration flux (J) versus the TMP begins to decrease. In the present embodiment, the critical pressure means a pressure indicated by an intersection of a line 1 of J = Jmax (maximum value of filtration flux) and a line 2, which is a tangent line at TMP = 0 in Formula (5), in a graph in which a vertical axis represents the filtration flux (J) and a horizontal axis represents the transmembrane pressure (TMP). That is, in the present embodiment, the critical pressure means a pressure ($TMP_c$) indicated by an intersection of the straight line of J = Jmax shown by the dotted line in FIG. 2 and a tangent line at TMP = 0 of the approximation obtained from Formula (5).

The critical pressure is a value that changes depending on the molecular weight and concentration of the solute in the raw liquid, as well as other operating conditions such as the temperature or, in the case of cross flow filtration, the flow velocity of the raw liquid, and therefore, it is preferable to obtain the critical pressure by using the target raw liquid and setting expected operating conditions. In the case of cross flow filtration, the critical pressure is also affected by a length of the ultrafiltration membrane module used to obtain the critical pressure. This is because the longer the ultrafiltration membrane module is, the greater a pressure loss caused by the raw liquid flow, and accordingly the raw liquid side pressure $P_f$ decreases and the TMP changes. Therefore, in the present specification, an effective length of the ultrafiltration membrane module used when obtaining the critical pressure from the relation between the transmembrane pressure and the filtration flux illustrated in FIG. 2 is set to 10 cm or more and 20 cm or less. Here, the effective length of the ultrafiltration membrane module refers to a length in a longitudinal direction of a portion of the surface of the ultrafiltration membrane that is in contact with the raw liquid.

As shown in FIG. 2 , when the TMP exceeds the critical pressure, an amount of increase in the filtration flux decreases even when the TMP is increased, and thus filtration efficiency decreases. Therefore, it is generally considered preferable to perform the filtration at a TMP lower than the critical pressure.

On the other hand, from the viewpoint of rejecting the polymer component, it is known that the higher the TMP, the lower the rejection rate. For example, "Membrane Science Experimental Methods - Artificial Membranes" (edited by the Membrane Society of Japan, 2006) describes that, as a characteristic of the ultrafiltration membrane, the higher the TMP, the lower the rejection rate. This is because, a concentration of a component on the surface of the ultrafiltration membrane becomes higher due to concentration polarization, and therefore, an amount of the component that permeates the ultrafiltration membrane increases even when the rejection rate of the ultrafiltration membrane does not change. Therefore, even when a high rejection rate is desired, it is recommended to perform filtration at a TMP lower than the critical pressure.

In the present embodiment, when A/B, which is a ratio of the molecular weight cut-off (MWCO) A of the ultrafiltration membrane to the weight average molecular weight (Mw) B of the solute in the raw liquid, is 0.05 or more and 0.30 or less, the rejection rate is improved by filtering the raw liquid through the ultrafiltration membrane at a transmembrane pressure equal to or higher than the critical pressure of the ultrafiltration membrane, unlike the tendency described above. From the viewpoint of further improving the rejection rate, it is preferable to filter the raw liquid at a TMP of at least two times the critical pressure of the ultrafiltration membrane, and it is more preferable to filter the raw liquid at a TMP of at least three times the critical pressure.

Note that when A/B is less than 0.05, that is, when the molecular weight cut-off is sufficiently smaller than the weight average molecular weight of the solute in the raw liquid, almost all components can be rejected regardless of the TMP. On the other hand, when A/B is greater than 0.30, the rejection rate tends to deteriorate as the TMP increases, and effects of the method for producing a concentrated liquid of the present invention are not achieved. From the viewpoint of improving the rejection rate, A/B is preferably 0.05 or more and 0.25 or less, and more preferably 0.05 or more and 0.20 or less.

The weight average molecular weight (Mw) B of the solute in the above-mentioned raw liquid is preferably a weight average molecular weight calculated from components having a molecular weight of 1,000 Da or more. If a component having a molecular weight of less than 1,000 Da is included, the weight average molecular weight may be underestimated. The weight average molecular weight (Mw) B is preferably calculated from components having a molecular weight of 5,000,000 Da or less. If the molecular weight is higher than 5,000,000 Da, dissolution becomes difficult and it tends to become impossible to measure the molecular weight.

The solute concentration in the raw liquid is preferably 0.1 mass% or more and 40 mass% or less.

The solute concentration in the raw liquid is preferably 0.1 mass% or more. This is because the higher the solute concentration, the more easily a high-concentration layer formed on the surface of the ultrafiltration membrane becomes dense, improving the rejection rate. The solute concentration in the raw liquid is more preferably 0.5 mass% or more, and still more preferably 1 mass% or more. The solute concentration in the raw liquid is preferably 40 mass% or less. If the solute concentration in the raw liquid is higher than 40 mass%, the viscosity of the raw liquid becomes too high, thereby making the filtration difficult, and therefore, by setting the solute concentration to 40 mass% or less, the viscosity can be controlled within a filterable range. The solute concentration in the raw liquid is more preferably 30 mass% or less, and further preferably 20 mass% or less.

The weight average molecular weight (Mw) B of the solute in the raw liquid is preferably 30,000 Da or more and 1,000,000 Da or less. The larger the weight average molecular weight, the more easily the pore diameter becomes dense even at a low concentration, and the rejection rate improves. The weight average molecular weight (Mw) B of the solute in the raw liquid is more preferably 50,000 Da or more, and still more preferably 100,000 Da or more.

The molecular weight cut-off (MWCO) A of the ultrafiltration membrane is preferably 5,000 Da or more and 300,000 Da or less. When the molecular weight cut-off (MWCO) A of the ultrafiltration membrane is less than 5,000 Da, a pressure required for the filtration becomes high, and excessive energy is required for the filtration. When the molecular weight cut-off (MWCO) A of the ultrafiltration membrane is 5,000 Da or more, the filtration can be performed within a standard pressure range. If the molecular weight cut-off (MWCO) A of the ultrafiltration membrane is higher than 300,000 Da, the polymer component may leak, thereby making concentration difficult.

It is preferable that the filtration is performed at a TMP of 50 kPa or more and 200 kPa or less. If the TMP is less than 50 kPa, the TMP will often be below the critical pressure, which may not contribute to improving the rejection rate. If the TMP is higher than 200 kPa, a rejecting ability is improved, but there is a high possibility that the TMP exceeds an allowable pressure of the ultrafiltration membrane, which may be unsuitable for the filtration. By setting TMP to 50 kPa or more and 200 kPa or less, it is possible to impart a TMP equal to or higher than the critical pressure and to operate within an allowable pressure range of the ultrafiltration membrane, which is preferable. Furthermore, it is preferable to perform the filtration at a TMP of 100 kPa or more and 200 kPa or less.

As a filtration method, either a dead end filtration method or a cross flow filtration method can be applied. Between the two, when the solute concentration is high, the cross flow filtration method is preferable from the viewpoint of preventing clogging of the ultrafiltration membrane.

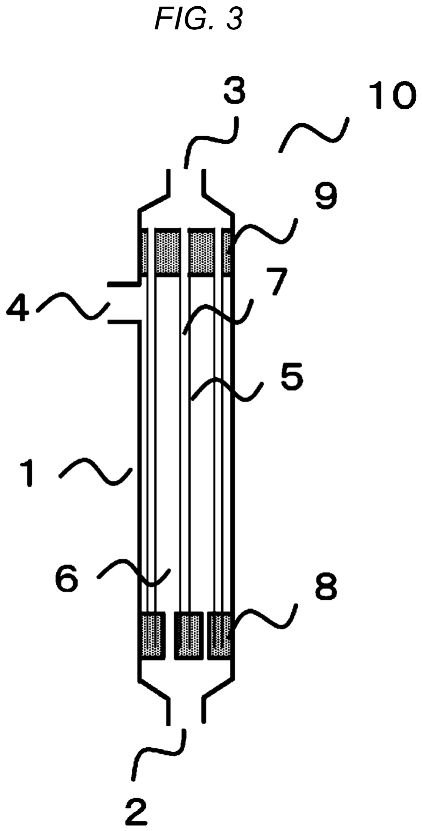

A shape of the ultrafiltration membrane is not particularly limited, and for example, ultrafiltration membranes of a flat shape, a hollow fibrous shape, a tubular shape, and other shapes are applicable. Among these, an external pressure type hollow fiber membrane whose outer surface is in contact with the raw liquid is preferred. Reasons therefor will be explained with reference to FIG. 3.

FIG. 3 is a schematic diagram illustrating one mode of a hollow fiber membrane module in which the hollow fiber membranes of the present embodiment are loaded. In the hollow fiber membrane module 10 of the present invention, a container 1 including the raw liquid inlet 2, the filtrate outlet 3, and the raw liquid outlet 4 is loaded with hollow fiber membranes 5. Both ends of the hollow fiber membrane 5 are embedded in a first potting portion 8 and a second potting portion 9, respectively, and the first potting portion 8 and the second potting portion 9 are fixed to the container 1. A lower end of the hollow fiber membrane 5 embedded in the first potting portion 8 is sealed. The first potting portion 8 includes a plurality of through holes through which the raw liquid introduced from the raw liquid inlet 2 passes. On the other hand, an upper end of the hollow fiber membrane 5 embedded in the second potting portion 9 is embedded in an open state.

The raw liquid inlet 2, the filtrate outlet 3, and the raw liquid outlet 4 are cylindrical nozzles that connect the container 1 and a pipe (not illustrated), and are fixed to the cylindrical container 1 in an open state. The raw liquid inlet 2 is connected to a lower end of the container 1, and the filtrate outlet 3 is connected to an upper end thereof. The raw liquid outlet 4 is connected to a side surface of the container 1 and is provided near the second potting portion 9. The container 1, the raw liquid inlet 2, the filtrate outlet 3 and the raw liquid outlet 4 may be made of either resin or metal.

The hollow fiber membrane 5 in the container 1 is a hollow fibrous membrane having a liquid separation function. The hollow fiber membrane 5 is loaded such that an axial direction of the container 1 is parallel to an axial direction of the hollow fiber membrane 5. The axial directions refer to a longitudinal direction of the container 1 and a longitudinal direction of the hollow fiber membrane 5.

The first potting portion 8 and the second potting portion 9 at which the plurality of hollow fiber membranes are fixed by an adhesive are portions in which gaps between the bundled hollow fiber membranes are filled with a potting agent containing a potting resin which is the so-called adhesive as a main component. The potting portions are preferably formed at ends of a hollow fiber membrane bundle.

The potting resin as a main component of the potting agent is preferably an epoxy resin, a polyurethane resin, or a silicone resin, which is excellent in adhesion to the hollow fiber membrane, heat resistance, and chemical durability. In addition to the potting resin, the potting agent may contain an additive such as silica, talc, mica, clay, calcium carbonate, glass, or rubber.

The first potting portion 8 is formed at a raw liquid inlet side end of the hollow fiber membrane 5. It is preferable that the raw liquid inlet side end of the hollow fiber membrane 5 is sealed. By sealing the raw liquid inlet side end, the filtrate flowing through a hollow portion flows in one direction, and a pressure difference can be generated between the raw liquid inlet side end and a filtrate outlet side end on the filtrate side of the hollow fiber membrane 5. Here, "sealed" means a state in which the solution flowing in the hollow fiber membrane 5 is not discharged from the sealed end.

The first potting portion 8 is fixed to the container 1, and has a plurality of through holes through which the raw liquid introduced from the raw liquid inlet 2 can pass, and the raw liquid is introduced into the hollow fiber membrane 5 through the through holes. The shape and number of the through holes are not specified, and are appropriately provided to reduce resistance and occurrence of flow unevenness according to a flow rate of the raw liquid passing through.

The first potting portion 8 may be adhesively fixed to the container 1 or may have a removable cartridge structure as long as the first potting portion 8 is fixed in a position such that the first potting portion 8 does not float up due to the flow of the raw liquid. The position fixing method is not particularly limited, and a structure of fixing the position between the container 1 and the first potting portion 8 or a structure of fixing the position between the second potting portion 9 and the first potting portion 8 can be appropriately selected.

The first potting portion 8 is not essential as long as the raw liquid inlet side end of the hollow fiber membrane 5 is sealed, and may not be a so-called fixed end in which the hollow fiber membrane bundles are fixed to each other with the potting agent, but may be a free end which is not fixed with the potting agent. The free end refers to a state in which the hollow fiber membranes are not fixed to each other with the potting agent and are freely movable. In this case, as a method for sealing the raw liquid inlet side end of the hollow fiber membrane 5, a method of injecting the potting agent into the hollow portion of the hollow fiber membrane 5 to seal, a method of welding the end by heat to seal, or the like can be applied.

Next, the second potting portion 9 is formed at the filtrate outlet side end of the hollow fiber membrane 5, and is fixed in a state in which the filtrate outlet side end of the hollow fiber membrane 5 is open. The open state refers to a state in which the solution flowing inside the hollow fiber membrane can be discharged from the open end.

Although the second potting portion 9 is fixed to the container 1, the second potting portion 9 and the container 1 may be adhesively fixed to each other, or the second potting portion 9 may have a so-called cartridge type structure in which the hollow fiber membrane can be attached and detached, as long as the raw liquid and the filtrate can be separated in a liquid-tight manner. In the case of the cartridge type, the second potting portion 9 and the container 1 may be connected via an O-ring or the like.

In the hollow fiber membrane module having the above structure, an inside of the container 1 is separated by the hollow fiber membranes 5 and the second potting portion 9 into a raw liquid side space 6 filled with the raw liquid and a filtrate side space 7 filled with the filtrate, and the raw liquid side space 6 is a space in contact with the outer surface of the hollow fiber membranes 5, and the filtrate side space 7 is a space in contact with the inner surface of the hollow fiber membranes 5.

The ultrafiltration membrane in the present embodiment is preferably an external pressure type hollow fiber membrane whose outer surface is in contact with the raw liquid. That is, the present invention is preferably applied to the so-called external pressure type hollow fiber membrane module in which the raw liquid inlet 2 and the raw liquid outlet 4 are connected to the raw liquid side space 6 and the filtrate outlet 3 is connected to the filtrate side space 7.

In contrast to an internal pressure type in which the raw liquid flows through the hollow portion of the hollow fiber membrane, in the external pressure type, the raw liquid flows outside the hollow fiber membrane. In the internal pressure type hollow fiber membrane, the raw liquid is made to flow through the narrow filtrate side space 7 to perform the cross flow filtration, and thus a pressure loss is large. If the pressure loss increases, TMP becomes uneven in the longitudinal direction of the hollow fiber membrane, making it difficult to impart a TMP equal to or greater than the critical pressure to the entire region in the longitudinal direction. On the other hand, in the external pressure type, the raw liquid flows through the raw liquid side space 6 with a large flow channel area, so that the operation can be performed with a small pressure loss of the raw liquid, and unevenness in the pressure loss in the longitudinal direction of the hollow fiber membrane can be reduced. As a result, in the external pressure type, it is easy to apply a transmembrane pressure equal to or greater than the critical pressure in the entire region in the longitudinal direction.

Regarding the length of the hollow fiber membrane, the effective length of the hollow fiber membrane module is preferably 0.5 m or more and 1.5 m or less. Here, the effective length of the hollow fiber membrane module refers to a length in a longitudinal direction of a portion of the surface of the hollow fiber membrane that is in contact with the raw liquid. By setting the effective length of the hollow fiber membrane to 0.5 m or more, a wide effective membrane area can be ensured. By setting the effective length of the hollow fiber membrane to 1.5 m or less, the pressure loss of the raw liquid due to cross flow can be reduced, and a TMP equal to or higher than the critical pressure can be easily applied to the entire region in the longitudinal direction.

Furthermore, when the hollow fiber membranes 5 are loaded in the hollow fiber membrane module, the TMP at the filtrate outlet side end of the hollow fiber membrane module (hereinafter also referred to as "TMPout") is preferably equal to or higher than the critical pressure of the ultrafiltration membrane, and it is more preferable that the TMPout of the hollow fiber membrane 5 is equal to or higher than the critical pressure. Normally, the pressure loss in the filtrate side space 7 is smaller than the pressure loss in the raw liquid side space 6, and therefore, the TMPout is smaller than the TMP at the raw liquid inlet side end of the hollow fiber membrane 5 (hereinafter also referred to as "TMPin"). Therefore, if the TMPout is equal to or higher than the critical pressure, a TMP equal to or higher than the critical pressure can be applied to the entire region of the hollow fiber membrane 5 in the longitudinal direction. Filtration at a pressure of TMPout twice or more the critical pressure is more preferable since the rejection rate can be further improved, and filtration at a pressure of TMPout three times or more the critical pressure is still more preferable since the rejection rate can be further improved. The TMPout can be controlled to be equal to or higher than the critical pressure by appropriately adjusting the viscosity and the flow velocity of the raw liquid, a loading rate of the hollow fiber membrane module, and the like.

The TMPout means a value calculated by the following Formula (13).

$$\text{TMPout} = \text{concentrated liquid outlet side pressure} - \text{filtrate outlet side pressure} \quad (13)$$

In FIG. 1, the TMPout is obtained by subtracting a pressure value of the filtrate pressure gauge 43 from a pressure value of the concentrated liquid pressure gauge 42.

In a case of concentration using the cross flow filtration method with an external pressure type hollow fiber membrane, when a ratio of a viscosity $\mu_f$ of the raw liquid to a viscosity $\mu_p$ of the filtrate after the raw liquid is filtered satisfies $\mu_f/\mu_p \geq 1.5$, the concentration is preferably operated such that a flow velocity ratio of a flow velocity $v_p$ of the filtrate to a flow velocity $v_f$ of the raw liquid satisfies $0.02 \leq v_p/v_f \leq 0.30$.

When the ratio $\mu_f/\mu_p$ of the viscosity $\mu_f$ of the raw liquid to the viscosity $\mu_p$ of the filtrate is 1.5 or more, the pressure loss in the filtrate side space 7 becomes smaller than the pressure loss in the raw liquid side space 6, but by controlling the flow velocity ratio of the flow velocity $v_p$ of the filtrate to the flow velocity $v_f$ of the raw liquid to satisfy $0.02 \leq v_p/v_f \leq 0.30$, a necessary filtrate flow rate can be ensured and a filtration cost can be reduced, while the pressure loss on the raw liquid side and the filtrate side can be made uniform, and a TMP equal to or higher than the critical pressure can be applied over the entire longitudinal direction of the hollow fiber membrane. If $v_p/v_f$ is larger than 0.02, the pressure loss on the raw liquid side becomes smaller or the pressure loss on the filtrate side becomes larger, so that the difference in TMP in the longitudinal direction of the hollow fiber membrane is reduced, and it becomes possible to impart a TMP equal to or higher than the critical pressure. Even if $v_p/v_f$ is smaller than 0.30, a circulating flow rate of the raw liquid relative to the filtrate flow rate does not become too large, and it is easy to obtain the effect of preventing accumulation of dirt on the surface of the hollow fiber membrane due to the raw liquid flow, and deterioration of filterability can be prevented, while applying a TMP equal to or higher than the critical pressure over the entire longitudinal direction of the hollow fiber membrane. When the ratio of the viscosity $\mu_f$ of the raw liquid to the viscosity $\mu_p$ of the filtrate after the raw liquid is filtered satisfies $\mu_f/\mu_p \geq 1.5$, it is preferable that $0.02 \leq v_p/v_f \leq 0.20$, and more preferable that $0.03 \leq v_p/v_f \leq 0.15$.

A method for measuring the flow velocity $v_f$ of the raw liquid and the flow velocity $v_p$ of the filtrate will be described with reference to FIG. 1 and FIG. 3. The flow velocity $v_f$ of the raw liquid is calculated by dividing a concentrated liquid flow rate $Q_c$ measured by the concentrated liquid flowmeter 31 by a flow channel area $S_f$ of the raw liquid side space 6 of the hollow fiber membrane module 10. The flow channel area $S_f$ of the raw liquid side space is a value obtained by subtracting a total cross-sectional area of the hollow fiber membranes 5 inserted into the container 1 from a cross-sectional area of the container 1. Assuming that an inner diameter of the container 1 is $D_c$, an outer diameter of the hollow fiber membrane 5 is $D_o$, and the number of the hollow fiber membranes 5 is N, $S_f$ is calculated by the following Formula (6).
[Math. 6]

$$v_f = \frac{Q_c}{S_f} = \frac{Q_c}{\pi(D_c/2)^2 - \pi(D_0/2)^2 N} \quad \cdots (6)$$

The flow velocity $v_p$ of the filtrate is calculated by dividing a filtrate flow rate $Q_p$ measured by the filtrate flowmeter 32 by a flow channel area $S_p$ of the filtrate side space 7. The flow channel area $S_p$ of the filtrate side space 7 is calculated by the following Formula (7) assuming that an inner diameter of the hollow fiber membrane 5 is $D_i$.
[Math. 7]

$$v_p = \frac{Q_p}{S_p} = \frac{Q_p}{\pi(D_i/2)^2 N} \quad \cdots (7)$$

Since the viscosity $\mu_f$ of the raw liquid and the viscosity $\mu_p$ of the filtrate change significantly depending on a temperature, it is preferable to measure the viscosity at the raw liquid temperature measured by a raw liquid thermometer 51. Furthermore, since the viscosity may change due to shearing caused by the flow of the raw liquid or the filtrate, it is preferable to measure the viscosity when a shear speed $\gamma$ is applied by the flow during operation.
The shear speed $\gamma$ is simply calculated from a flow velocity $v$ and a flow channel diameter $D_c$ by the following Formula (8). The flow channel diameter $D_e$ of the filtrate side space 7 is the inner diameter $D_i$ of the hollow fiber membrane 5. On the other hand, since the flow channel diameter $D_e$ of the raw liquid side space 6 has a complicated shape, an equivalent diameter calculated by the following Formula (9) is defined as the flow channel diameter $D_e$.
[Math. 8]

$$\gamma = \frac{4v}{D_e} \quad \cdots (8)$$

[Math. 9]

$$D_e = \frac{4S_f}{\pi D_0 N + \pi D_c} \quad \cdots (9)$$

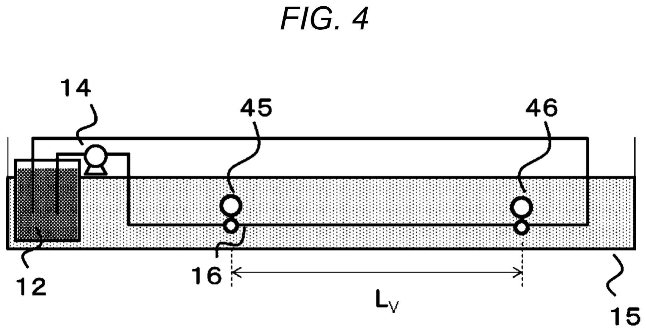

FIG. 4 is a schematic diagram illustrating one mode of the viscosity measurement using a capillary viscometer. As for a method for measuring the viscosity, a viscosity measured at the same temperature and shear speed as in actual operation using a capillary viscometer is defined as the viscosity in the present embodiment. That is, as shown in FIG. 4, in a constant-temperature water bath 15, a fluid is passed from the raw liquid tank 12 by the supply pump 14 through a fine tube 16 having an inner diameter $D_v$ and a length $L_v$ at a flow velocity $v_v$, and a viscosity $\mu$ is measured using the following Formula (10) from a tube inlet pressure $P_1$ measured by a tube inlet pressure gauge 45 and a tube outlet pressure $P_2$ measured by a tube outlet pressure gauge 46. Using the above Formula (8), the flow velocity $v_v$ in the fine tube is set so that the shear speed during the actual operation and the shear speed in the capillary viscometer are the same, and then the viscosity is measured.
[Math. 10]

$$\mu = \frac{D_v^2 (P_1 - P_2)}{32 v_v L_v} \quad \cdots (10)$$

The capillary viscometer is not particularly limited as long as the temperature of the tube can be adjusted and the pressure at the inlet and outlet of the tube can be measured, and any commercially available or self-produced apparatus can be used. Since the viscosity $\mu_f$ of the raw liquid and the viscosity $\mu_p$ of the filtrate change significantly depending on a temperature, it is preferable to measure the viscosity at the raw liquid temperature measured by the raw liquid thermometer 51.
The flow velocity $v_f$ of the raw liquid preferably satisfies $0.30\ \text{m/s} \le v_f \le 1.80\ \text{m/s}$. When $v_f < 0.30\ \text{m/s}$, a cleaning effect on the hollow fiber membrane surface by a function of the raw liquid flow becomes small, and fouling tends to progress more quickly. When $v_f > 1.80\ \text{m/s}$, the cleaning effect on the hollow fiber membrane surface by the function of the raw liquid flow is increased, but on the other hand, the pressure loss in the raw liquid side space 6 increases, and a high raw liquid side pressure is applied to the raw liquid inlet side end of the hollow fiber membrane 5. As a result, even in the external pressure type, it tends to be difficult to impart a TMP equal to or higher than the critical pressure. The flow velocity $v_f$ of the raw liquid preferably satisfies 0.50 m/s $\leq v_f \leq$ 1.50 m/s, and more preferably satisfies 0.70 m/s $\leq v_f \leq$ 1.30 m/s.

Fouling is a phenomenon that a separation membrane is clogged with solutes or suspended substances, and the filtrate flow rate decreases as the filtration continues. As a result, after fouling, a higher TMP needs to be applied to obtain the same filtrate flow as before fouling. For the ultrafiltration membrane, molecules larger than the pore diameter accumulate on the surface of the hollow fiber membrane 5. Molecules contained in the raw liquid that are smaller than the pore diameter enter the pores. Accordingly, clogging occurs on the membrane surface and inside the membrane. This tendency becomes more obvious when the filtration is performed at a TMP higher than the critical pressure.

In operation of external pressure type cross flow filtration, the raw liquid flow can clean foulants on the membrane surface, but foulants that have penetrated into the membrane cannot be cleaned. For the foulants that have penetrated into the membrane, backwash cleaning, in which a cleaning liquid is sent from the filtrate side to the raw liquid side, is effective, thereby making it possible to remove the foulants inside the membrane. However, it is difficult to cleaning all the foulants by backwash cleaning alone, and over a long period of time of operation, the foulants may cause the membrane to be clogged, making it necessary to eventually clean the membrane with chemicals. Cleaning with chemicals induces deterioration in strength of the membrane, which impedes use of the membrane for a long period of time.

When the viscosity of the filtrate is lower than that of the raw liquid, the polymer components in the raw liquid in particular are retained in the raw liquid side space by the ultrafiltration membrane, and the polymer components adhere to the membrane surface, resulting in the accumulation of foulants mainly on the membrane surface and in the pores near the surface. In contrast, in the hollow fiber membrane, when a pore diameter D of the outer surface is 5 nm or more and 20 nm or less, and a ratio C/D of a pore diameter C of the inner surface to the pore diameter D of the outer surface is greater than 50, the cleaning effect of the backwash cleaning is particularly excellent, which is preferable.

If the pore diameter D of the outer surface of the hollow fiber membrane is larger than 20 nm, foulants will easily penetrate into the membrane, and the effect of the backwash cleaning decreases. If the pore diameter on the outer surface of the hollow fiber membrane is smaller than 5 nm, the filtrate flow rate is small, resulting in a significant decrease in filtration efficiency, and therefore an increase in the number of membranes is required, leading to an increase in the filtration cost. It is more preferable that the pore diameter D of the outer surface of the hollow fiber membrane is 5 nm or more and 15 nm or less.

C/D, which is the ratio of the pore diameter C of the surface (inner surface) of the hollow fiber membrane that is in contact with the filtrate to the pore diameter D of the surface (outer surface) that is in contact with the raw liquid, is preferably greater than 50. When C/D is greater than 50, backwash cleaning can be performed suitably. An upper limit of C/D is not particularly limited, and is, for example, 1000 or less, preferably 700 or less, since the larger the value of C/D, the higher cleaning recovery performance of the hollow fiber membrane by the backwash cleaning. In this way, by controlling the pore diameters of the inner and outer surfaces, stable filtration for a long period of time is possible even when the filtration is performed at a TMP higher than the critical pressure.

In the backwash cleaning, the cleaning liquid is caused to flow from the inner surface of the hollow fiber membrane to the outer surface thereof. The backwash cleaning step can be carried out using compressed gas, a pump, or the like from the filtrate tank 13. In general, the cleaning liquid used in the backwash cleaning step is a liquid having a low viscosity such as pure water or a filtrate, so as to easily exhibit the cleaning effect. The backwash cleaning step can be carried out during or after the cross flow filtration, and is not particularly limited.

The larger the value of $\mu_f/\mu_p$, which is the viscosity $\mu_f$ of the raw liquid and the viscosity $\mu_p$ of the filtrate, the higher cleaning recoverability of the hollow fiber membrane by the backwash cleaning, and therefore, an upper limit thereof is not particularly limited, and $\mu_f/\mu_p$ is preferably, for example, 30.0 or less, and more preferably 10.0 or less.

The pore diameters of the outer surface and the inner surface of the hollow fiber membrane are diameters of pores within the surfaces when the outer surface and the inner surface are observed, and can be determined from images of each surface obtained using a scanning electron microscope (hereinafter also referred to as "SEM") or the like. Specifically, the obtained image is binarized using free software "ImageJ". During binarization, after Create Background is performed by Subtract Background with 1 pixel, Condition: Renyi Entropy is selected in Threshold (threshold for binarization). In the obtained binarized images, an area of each pore is determined by selecting Area in Analyze Particles, and the diameter calculated on an assumption that each pore is a circle is defined as the pore diameter of the surface. When an average value of the pore diameters of the surface is determined, the pore diameters of one thousand or more pores are averaged to determine the average value.

When it is difficult to determine the pore diameter of the surface from the SEM image, it may be determined by the following method. A porous membrane, which was embedded using a commercially available embedding agent for frozen tissue section preparation (O.C. T. Compound, manufactured by Tissue-Tek Co., Ltd.), was sampled at -40°C using a cryogenic ultramicrotome (FC7, manufactured by Leica) to obtain a section having a thickness of 100 nm with the porous membrane being oriented perpendicularly to the surface, and the section was dried under vacuum at room temperature overnight. A cross section of the surface of the porous membrane was observed by SEM to obtain an image, and the image is binarized using the free software "ImageJ". In the binarization, a condition: Minimum is selected in Threshold (threshold for binarization). In the obtained binarized image, for pores present from each surface to a position having a depth of 10 μm, an area of each pore was determined by selecting Area in Analyze Particles, and the diameter calculated assuming that each pore is a circle is used as the pore diameter of each surface, and the pore diameters of one thousand or more pores are averaged to obtain an average value.

A material of the hollow fiber membrane is not particularly limited, and specific examples thereof include polysulfone-based resins, polyethersulfone-based resins, polyvinylidene difluoride-based resins, nylons, cellulose esters such as cellulose acetate and cellulose acetate propionate, polymers of acrylic acid esters or methacrylic acid esters such as fatty acid vinyl esters, polyvinyl alcohol, polyvinyl acetate, polyvinylpyrrolidone, ethylene oxide, propylene oxide, and polymethyl methacrylate, and copolymers thereof.

Especially, in performing the external pressure type cross flow filtration, high strength is required for the hollow fiber membrane, and therefore, it is preferable to use a high-strength material for the hollow fiber membrane, and the material of the hollow fiber membrane preferably contains a polyvinylidene difluoride-based resin, which has excellent strength. The polyvinylidene difluoride-based resin refers to a homopolymer of vinylidene fluoride or a copolymer of vinylidene fluoride. Here, the copolymer of vinylidene fluoride refers to a polymer having a vinylidene fluoride residue structure. The polymer having a vinylidene fluoride residue structure is typically a copolymer of a vinylidene fluoride monomer and other fluorine-based monomers or the like. Examples of such a fluorine-based monomer include vinyl fluoride, tetrafluoroethylene, hexafluoropropylene, and trifluorochloroethylene. In the copolymer of vinylidene fluoride, ethylene or the like other than the above fluorine-based monomer may be copolymerized to an extent that the effect of the present embodiment is not impaired.

Next, the hollow fiber membrane 5 used in the present embodiment preferably has a load at breaking of 500 gf/fiber or more. In the external pressure type cross flow filtration, as an example, as illustrated in FIG. 1, the raw liquid is introduced from the raw liquid inlet 2 of the hollow fiber membrane module 10 to the hollow fiber membrane module 10 and then discharged from the raw liquid outlet 4, and when the raw liquid is discharged from the raw liquid outlet 4, the flow of the raw liquid is turned by 90°. Therefore, a shearing force perpendicular to a lengthwise direction of the hollow fiber membrane 5 is applied to the hollow fiber membrane 5 in the vicinity of the raw liquid outlet 4.

The load at breaking refers to a load (gf) applied when the hollow fiber membrane 5 is stretched in the axial direction by a tensile tester or the like and breaks. The load at breaking of the hollow fiber membrane 5 is preferably 600 gf/fiber or more, and more preferably 700 gf/fiber or more.

A method for measuring the load at breaking is not particularly limited, and for example, the load at breaking can be measured by stretching a sample with a measurement length of 50 mm at a stretching speed of 50 mm/min using a tensile tester that can control an ambient temperature, and then repeating at least 5 times with different samples to obtain an average value of the loads at breaking. The measuring temperature at this time is preferably the temperature of the raw liquid during actual operation.

The hollow fiber membrane 5 in the present embodiment may be a single-layer hollow fiber membrane or a composite hollow fiber membrane formed by laminating two or more layers. Since the hollow fiber membrane separates the raw liquid by external pressure type cross flow filtration, a hollow fiber membrane with a dense outer surface layer is preferable.

A method for producing the hollow fiber membrane module according to the present embodiment will be described below.

(Method for Producing Hollow Fiber Membrane)

As an example of a method for producing the hollow fiber membrane according to the present embodiment, a method for producing the hollow fiber membrane using a fluororesin-based polymer will be shown. Various methods such as a thermally induced phase separation method and a nonsolvent induced phase separation method can be used as the method for producing the hollow fiber membrane using a fluororesin-based polymer. A production method using thermally induced phase separation will be described below.

The fluororesin-based polymer is dissolved in a poor solvent or a good solvent of the fluororesin-based polymer at a relatively high temperature equal to or higher than a crystallization temperature to prepare a fluororesin-based polymer solution (that is, a membrane producing raw liquid containing the fluororesin-based polymer).

When a polymer concentration in the membrane producing raw liquid is high, a porous hollow fiber membrane having high strength is obtained. On the other hand, when the polymer concentration in the membrane producing raw liquid is low, a porosity of the porous hollow fiber membrane increases, and pure water transmissivity is improved. Therefore, a concentration of the fluororesin-based polymer in the membrane producing raw liquid is preferably 20 mass% or more and 60 mass% or less, and more preferably 30 mass% or more and 50 mass% or less.

In the present specification, a poor solvent for the fluororesin-based polymer refers to a solvent that cannot dissolve the fluororesin-based polymer to 5 mass% or more at a low temperature of 60°C or lower, but can dissolve the fluororesin-based polymer to 5 mass% or more in a high temperature range from 60°C or higher to a melting point of the fluororesin-based polymer (for example, approximately 178°C in a case where the polymer contains a vinylidene fluoride homopolymer alone) or less. A good solvent refers to a solvent capable of dissolving the fluororesin-based polymer to 5 mass% or more even in a low temperature range of lower than 60°C, and a nonsolvent is defined as a solvent that does not dissolve or swell the fluororesin-based polymer even at the melting point of the fluororesin-based polymer or a boiling point of the solvent.

Here, examples of the poor solvent for the fluororesin-based polymer include cyclohexanone, isophorone, $\gamma$-butyrolactone, methyl isoamyl ketone, propylene carbonate, dimethyl sulfoxide, and mixed solvents thereof. Examples of the good solvent for the fluororesin-based polymer include N-methyl-2-pyrrolidone, dimethylacetamide, dimethylformamide, methylethyl ketone, acetone, tetrahydrofuran, tetramethylurea, trimethyl phosphate, and mixed solvents thereof. Examples of the nonsolvent for the fluororesin-based polymer include water, aliphatic hydrocarbons such as hexane, pentane, benzene, toluene, methanol, ethanol, carbon tetrachloride, o-dichlorobenzene, trichloroethylene, ethylene glycol, diethylene glycol, triethylene glycol, propylene glycol, butylene glycol, pentanediol, hexanediol, and low molecular weight polyethylene glycol, aromatic hydrocarbons, aliphatic polyhydric alcohols, aromatic polyhydric alcohols, chlorinated hydrocarbons, other chlorinated organic liquids and mixed solvents thereof.

In a forming step of the hollow fiber membrane, the hollow fiber membrane is obtained from the membrane producing raw liquid containing the fluororesin-based polymer by using a thermally induced phase separation method in which phase separation is induced by temperature change. In the thermally induced phase separation method, two types of phase separation mechanisms are mainly used. One is a liquid-liquid phase separation method in which a polymer solution uniformly dissolved at a high temperature is separated into a polymer concentrated phase and a polymer dilute phase due to a decrease in solubility of the solution during temperature drop, and then a structure thereof is fixed by crystallization. The other is a solid-liquid phase separation method in which a polymer solution uniformly dissolved at a high temperature undergoes crystallization of the polymer during temperature drop and is phase-separated into a polymer solid phase and a solvent phase.

The former method mainly forms a three-dimensional network structure, and the latter method mainly forms a spherical structure constituted by a spherical tissue. Although the phase separation mechanism is not particularly specified in the production of the hollow fiber membrane of the present embodiment, the latter phase separation mechanism is preferably used for a hollow fiber membrane for cross flow filtration which requires strength. Accordingly, a polymer concentration and a solvent at which solid-liquid phase separation is induced are selected.

As a specific method, a hollow portion formation liquid is discharged from a tube on an inner side of a double tube type spinneret while the above-described membrane producing raw liquid is discharged from a tube on an outer side of the double tube type spinneret. The thus discharged membrane producing raw liquid is cooled and solidified in a cooling bath to obtain a porous hollow fiber membrane.

Next, the cooling bath for cooling the fluororesin-based polymer solution discharged from the spinneret will be described. For the cooling bath, it is preferable to use a mixed liquid including a poor solvent or a good solvent having a concentration of 50 mass% to 95 mass% and a nonsolvent having a concentration of 5 mass% to 50 mass%. Further, as the poor solvent, the same poor solvent as in the polymer solution is preferably used. In the hollow portion formation liquid, it is preferable to use a mixed liquid including a poor solvent or a good solvent having a concentration of 50 mass% to 95 mass% and a nonsolvent having a concentration of 5 mass% to 50 mass%, similarly to the cooling bath. Further, as the poor solvent, the same poor solvent as in the polymer solution is preferably used. A hollow fiber membrane made of a fluororesin-based polymer obtained by the above method may be stretched. A stretching ratio and a stretching temperature are appropriately selected according to a desired pore diameter, dimension, and pure water transmissivity.

In the case of obtaining the hollow fiber membrane to be loaded in the hollow fiber membrane module of the present embodiment, the inner and outer diameters of the hollow fiber membrane can be controlled mainly by adjusting a spinneret diameter of the double tube type spinneret and discharge amounts of the membrane producing raw liquid and the hollow portion formation liquid. That is, a hollow fiber membrane having large inner and outer diameters can be obtained by using a double tube type spinneret having a large diameter or by increasing the discharge amounts of the membrane producing raw liquid and the hollow portion formation liquid. The dimension can also be adjusted by changing the stretching ratio and the stretching temperature.

Examples of a method for obtaining a composite hollow fiber membrane include a method of simultaneously forming a plurality of layers and a method of sequentially forming another layer on a single layer hollow fiber membrane. Examples of the former method include a method of performing composite molding of a plurality of resin solutions using a multi-tube type spinneret. Examples of the latter method include a method in which a resin solution for forming another layer is applied to a hollow fiber membrane obtained after the above step, and then the hollow fiber membrane is scraped by a nozzle or a slit coater, and a method in which the resin solution for forming another layer is spray-coated. Between the two methods, the method of applying a resin solution for forming another layer, and then scraping and solidifying the membrane is simple and preferable.

In the production of the composite hollow fiber membrane by the above method, the resin solution for forming another layer is not particularly limited, and when a purpose of modifying or densifying the surface of the hollow fiber membrane is to be achieved, a three-dimensional network structure is preferably used. In the case of a composite hollow fiber membrane constituted by a spherical structure and a three-dimensional network structure, a nonsolvent induced phase separation method can be used to form the three-dimensional network structure. Here, the nonsolvent induced phase separation refers to phase separation in which the resin solution is solidified by being brought into contact with a nonsolvent.

When the nonsolvent induced phase separation method is used, as a solvent for the resin solution, a good solvent for the resin is preferable, and examples of the good solvent for the polyvinylidene difluoride-based resin include lower alkyl ketones, esters, amides, and the like such as N-methyl-2-pyrrolidone, dimethylacetamide, dimethylformamide, methyl ethyl ketone, acetone, and tetrahydrofuran, and mixed solvents thereof. Here, the good solvent for the polyvinylidene difluoride-based resin refers to a solvent capable of dissolving the polyvinylidene difluoride-based resin to 5 mass% or more even at a low temperature of lower than 60°C.

The nonsolvent for the polyvinylidene difluoride-based resin is defined as a solvent that does not dissolve or swell the polyvinylidene difluoride-based resin even at a melting point of the polyvinylidene difluoride-based resin or a boiling point of the solvent. Here, examples of the nonsolvent for the polyvinylidene difluoride-based resin include water, aliphatic hydrocarbons such as hexane, pentane, benzene, toluene, methanol, ethanol, carbon tetrachloride, o-dichlorobenzene, trichloroethylene, ethylene glycol, diethylene glycol, triethylene glycol, propylene glycol, butylene glycol, pentanediol, hexanediol, and low molecular weight polyethylene glycol, aromatic hydrocarbons, aliphatic polyhydric alcohols, aromatic polyhydric alcohols, chlorinated hydrocarbons, and other chlorinated organic liquids and mixed solvents thereof.

(Production of Hollow Fiber Membrane Module)

Types of the hollow fiber membrane module are classified into a container-integrated module in which the container 1 and the hollow fiber membrane 5 are fixed by an adhesive and a cartridge type module in which the container 1 and the hollow fiber membrane 5 are not fixed by an adhesive and the hollow fiber membrane 5 is attachable to and detachable from the container 1.

In the container-integrated module, the plurality of hollow fiber membranes 5 are inserted into the container 1, and the ends of the hollow fiber membranes 5 and the container 1 are fixed with an adhesive. In the cartridge type module, the hollow fiber membranes are inserted into a dedicated fixture or the like, and the membranes are adhered to each other with an adhesive, and are not fixed to the container 1.

In either method, the hollow fiber membrane 5 is inserted into a fixture or a container, or into both, and an adhesive is poured therein for fixing. Examples of a method for filling a gap between the hollow fiber membranes with the adhesive include a centrifugal potting method in which a potting agent is permeated by using a centrifugal force, and a static potting method in which the adhesive is permeated by natural flowing. The adhesive may be injected into a mold for casting to fill the gap between the hollow fiber membranes.

In the case of opening the hollow fiber membrane end fixed by the adhesive, the end of the hollow fiber membrane 5 is sealed in advance so that the adhesive does not flow into the hollow portion in the hollow fiber membrane when the adhesive is poured, and is fixed by the adhesive. Examples of the sealing method include a method of injecting an adhesive only into the hollow portion and a method of welding with heat or a solvent. After the hollow fiber membrane 5 with the sealed end is fixed with an adhesive, the other end side of the sealed portion can be cut in a cross-sectional direction of the hollow fiber membrane 5 to create an opening. In the case where the hollow fiber membrane ends are fixed with an adhesive without being sealed, the adhesive flows into the hollow portions of the hollow fiber membranes 5, so that the ends of the hollow fiber membranes are sealed.

In the present embodiment, a method of fixing both ends of the hollow fiber membrane 5 with an adhesive may be adopted, but the raw liquid inlet side end of the hollow fiber membrane 5 may be a free end which is not fixed with an adhesive.

In the method for producing a concentrated liquid of the raw liquid of the present embodiment, it is also preferable to further concentrate the concentrated liquid obtained by concentrating the raw liquid using the ultrafiltration membrane by thermal concentration. As the concentration of the raw liquid progresses, the viscosity of the raw liquid continues to increase, and eventually reaches a viscosity at which the ultrafiltration membrane becomes difficult to operate, but it is possible to further increase the concentration of the concentrated liquid in the ultrafiltration membrane by thermal concentration. In the present embodiment, a method is provided for improving the rejecting ability for polymer components of the ultrafiltration membrane, and by combining the method with thermal concentration, it is possible to increase a recovery rate as compared with concentration using a normal separation membrane.

Examples

Hereinafter, the present invention will be described with reference to specific examples of the hollow fiber membrane, but the present invention is not limited thereto. First, the methods for measuring each characteristic are shown below.

(Method for Measuring Molecular Weight Cut-off)

A module equipped with three hollow fiber membranes was produced by filling a housing with a diameter of 5 mm and a length of 17 cm with the hollow fiber membranes, potting each end with 0.5 cm of an epoxy resin-based chemical reaction-type adhesive "Quickmender" (registered trademark) manufactured by Konishi Co., Ltd., and then cutting to open the housing, and the module was cleaned by running distilled water through the module at a flow rate of 100 ml/min for 1 hour. In this case, an effective length of the hollow fiber membrane module was 11 cm.

Next, dextran having an average molecular weight of up to 1,500 (No. 31394), dextran having an average molecular weight of up to 6,000 (No. 31388), dextran having an average molecular weight of 15,000 to 20,000 (No. 31387), dextran having an average molecular weight of up to 40,000 (No. 31389), dextran having an average molecular weight of up to 60,000 (No. 31397), and dextran having an average molecular weight of up to 200,000 (No. 31398) manufactured by Fluka were each dissolved in distilled water to a concentration of 0.5 mg/ml (total solute: 3.0 mg/ml) to prepare aqueous dextran solution (raw liquid). The same raw liquid was caused to flow through the inside of the hollow fiber membrane of the module and filtered from the inside to the outside. A temperature at which the same raw liquid was caused to flow was set to 25°C, and a flow velocity was adjusted so that the raw liquid flow rate was 20 ml/min and the filtrate flow rate was 0.24 ml/min. A module raw liquid outlet liquid and a filtrate were collected for 15 minutes from 60 minutes to 75 minutes after the raw liquid was started to flow, and the raw liquid inlet liquid was collected 75 minutes after the raw liquid was started to flow. Concentrations of the collected liquids were measured by GPC. The sampled aqueous solution was filtered through a filter having a pore diameter of 0.5 $\mu$m, and the filtrate was passed through a GPC column (Tosoh TSK-gel-G3000 PWXL), and analyzed at a column temperature of 40°C, with 1 ml/min of distilled water for liquid chromatography as a mobile phase and a sample injection amount of 100 $\mu$l, and the concentration thereof was measured using a differential refractometer (Tosoh RI-8020) with a slice time of 0.02 min and a base-line range of 4.5 min to 11.0 min. A calibration curve for the weight average molecular weight of dextran was prepared immediately before the measurement using monodisperse dextran (Dextran Standards No. 31416, No. 31417, No. 31418, No. 31420, and No. 31422 manufactured by Fluka). A sieving coefficient (SC) of each weight average molecular weight was calculated from the dextran concentration (Ca) at the module raw liquid inlet, the dextran concentration (Cb) at the outlet, and the dextran concentration (Cf) of the filtrate using the following Formula (11).

$$SC = 2Cf/(Ca + Cb) \quad (11)$$

The weight average molecular weight at which the SC was 0.1 was defined as the molecular weight cut-off. When the molecular weight cut-off was equal to or greater than an upper limit of measurement, a similar filtration test was carried out using dextran having a molecular weight of 200,000 or more. In this case, the GPC measurement conditions were appropriately changed according to the molecular weight, and the molecular weight was determined from the calibration curve.

(Method for Measuring Pore Diameter)

An image obtained by using the SEM to observe the surface of the separation membrane was binarized using free software "ImageJ". During binarization, after Create Background was performed by Subtract Background with 1 pixel, Condition: Renyi Entropy was selected in Threshold (threshold for binarization). In the obtained binarized images, an area of each pore was determined by selecting Area in Analyze Particles, and the diameter calculated on an assumption that each pore was a circle was defined as the pore diameter. The pore diameters on the inner surface and the outer surface of the separation membrane were each determined by averaging pore diameters of 1,000 or more pores.

When it was difficult to observe the pores on each surface using the SEM, the following method was used. A porous membrane, which was embedded using a commercially available embedding agent for frozen tissue section preparation (O.C.T. Compound, manufactured by Tissue-Tek Co., Ltd.), was sampled at -40°C using a cryogenic ultramicrotome (FC7, manufactured by Leica) to obtain a section having a thickness of 100 nm with the porous membrane being oriented perpendicularly to the surface, and the section was dried under vacuum at room temperature overnight. A cross section of the surface of the porous membrane was observed by SEM to obtain an image, and the image was binarized using the free software "ImageJ". In the binarization, a condition: Minimum was selected in Threshold (threshold for binarization). In the obtained binarized image, for pores present from each surface to a position having a depth of 10 $\mu$m, an area of each pore was determined by selecting Area in Analyze Particles, and the diameter calculated assuming that each pore is a circle is used as the pore diameter of each surface, and pore diameters of 1,000 or more pores are averaged to obtain the pore diameters of the inner surface and the outer surface of the separation membrane.

(Method for Measuring Weight Average Molecular Weight)

A polyethylene glycol (hereinafter also referred to as "PEG") standard sample (02393-1EA) manufactured by Sigma-Aldrich was used, and an aqueous solution thereof adjusted to have a concentration of 1000 ppm was filtered through a filter with a pore diameter of 0.5 $\mu$m, and the filtrate was passed through a GPC column (TSK-gel(registered trademark)-G3000 PWXL manufactured by Tosoh Corporation), and analyzed at a column temperature of 40°C, with 1 ml/min of distilled water for liquid chromatography as a mobile phase and a sample injection amount of 100 $\mu$l, and measurement was performed using a differential refractometer (RI-8020 manufactured by Tosoh Corporation) with a slice time of 0.02 min and a base-line range of 4.5 min to 11.0 min to obtain a calibration curve.

Three types of aqueous solutions were prepared by monodispersing PEG (25322-68-3) having a molecular weight of 100,000 Da manufactured by Aldrich Chemical Company, PEG (160-18521) having a molecular weight of 500,000 Da manufactured by Wako Pure Chemical Industries, Ltd., and PEG (164-13801) having a molecular weight of 2,000,000 manufactured by Fujifilm Wako Pure Chemical Industries, Ltd., each to 1000 ppm. These three types of aqueous solutions were filtered through a filter having a pore diameter of 0.5 $\mu$m, and the filtrates were passed through the above-mentioned GPC column, and the weight average molecular weights thereof were measured under the same conditions. The weight average molecular weights were calculated from the obtained chromatograph and the calibration curve, and as a result, the weight average molecular weight of PEG having a molecular weight of 100,000 Da was 210,000 Da, and the weight average molecular weight of PEG having a molecular weight of 500,000 Da was 560,000 Da. Since it was difficult to separate the PEG with a molecular weight of 2,000,000 Da by size using this column, the weight average molecular weight thereof was defined as 2,000,000 Da as indicated by the manufacturer.

(Method for Measuring Viscosity)

An aqueous solution containing a target component adjusted to a predetermined concentration was used as a raw liquid, and a viscosity thereof was measured using a capillary viscometer illustrated in FIG. 4. The raw liquid was circulated with a temperature and a flow velocity thereof set to the temperature and the flow velocity of the raw liquid in a "rejection rate measurement test" described below, and a tube inlet pressure P1 and a tube outlet pressure P2 were measured, and the viscosity was calculated by the above Formula (10). The capillary viscometer is not particularly limited as long as the temperature of the tube can be adjusted and the pressures at the tube inlet and the tube outlet can be measured, and any commercially available or self-produced apparatus can be used.

Next, a method for producing the hollow fiber membrane and the hollow fiber membrane module and a method for evaluating the same will be described.

(Production of Hollow Fiber Membrane)

(Reference Example 1)

First, 39 mass% of vinylidene fluoride homopolymer (KF 1300 manufactured by Kureha Corporation, weight average molecular weight: 417,000, number average molecular weight: 221,000) and 61 mass% of $\gamma$-butyrolactone were dissolved and mixed at 150°C to obtain a polymer solution as a raw material liquid.

For pressure application and discharge of the obtained raw material liquid, an apparatus including a double tube type spinneret, a tube connected to the spinneret, and two gear pumps disposed on the tube was used. In the tube between the gear pumps, the raw material liquid was retained at 100°C to 103°C for 15 seconds while being pressurized to 2.5 MPa. Thereafter, the raw material liquid was discharged from an outer tube of the double tube type spinneret while an 85 mass% $\gamma$-butyrolactone aqueous solution was discharged from an inner tube thereof. The raw material liquid was retained for 20 seconds in a cooling bath having a temperature of 5°C and made of 85 mass% $\gamma$-butyrolactone aqueous solution, and then solidified to obtain a hollow fiber membrane. Next, the hollow fiber membrane obtained above was stretched 1.5 times in water at 95°C to obtain a support layer having a spherical structure.

Next, a polymer solution was prepared by stirring at 120°C for 4 hours a mixture of 12 mass% of vinylidene fluoride homopolymer having a weight average molecular weight of 284,000, 4.8 mass% of cellulose diacetate (manufactured by Eastman Co.; CA-398-3), 2.4 mass% of cellulose triacetate (manufactured by Eastman Co.; CA-436-80S), and 80.8 mass% of N-methyl-2-pyrrolidone. This polymer solution was uniformly applied to a support layer having a spherical structure obtained above, and immediately coagulated in a coagulation bath made of 100 mass% of water, thereby forming a functional layer having a three-dimensional network structure on the support layer having a spherical structure, so as to produce a hollow fiber membrane.

Performance of the obtained hollow fiber membrane is shown in Table 1. The molecular weight cut-off A was 100,000 Da, the pore diameter of the outer surface was 15 nm, and the pore diameter of the inner surface was 1530 nm. The outer diameter was 1.30 mm and the inner diameter was 0.75 mm.

(Reference Example 2)

A membrane having a small molecular weight cut-off was obtained by lowering the coagulation bath temperature after the polymer solution was applied to the support layer in Reference Example 1. Performance of the obtained hollow fiber membrane is shown in Table 1. The molecular weight cut-off A was 65,000 Da, the pore diameter of the outer surface was 9 nm, and the pore diameter of the inner surface was 1530 nm. The outer diameter was 1.30 mm and the inner diameter was 0.75 mm.

(Reference Example 3)

A polymer solution was prepared by stirring at 120°C for 4 hours a mixture of 12 mass% of vinylidene fluoride homopolymer having a weight average molecular weight of 284,000, 4.8 mass% of cellulose diacetate (manufactured by Eastman Co.; CA-398-3), 2.4 mass% of cellulose triacetate (manufactured by Eastman Co.; CA-436-80S), and 80.8 mass% of N-methyl-2-pyrrolidone.

This polymer solution was discharged from a double tube type spinneret. While 100 mass% of water was discharged from an inner tube of the double tube type spinneret, the polymer solution was discharged from an outer tube. A hollow fiber membrane having a three-dimensional network structure was produced by coagulating in a coagulation bath made of 100 mass% of water.

Performance of the obtained hollow fiber membrane is shown in Table 1. The molecular weight cut-off A was 100,000 Da, the pore diameter of the outer surface was 15 nm, and the pore diameter of the inner surface was 20 nm. The outer diameter was 1.30 mm and the inner diameter was 0.75 mm.

(Reference Example 4)

A membrane having a large molecular weight cut-off was obtained by raising the coagulation bath temperature after the polymer solution was applied to the support layer in Reference Example 1. Performance of the obtained hollow fiber membrane is shown in Table 1. The molecular weight cut-off A was 120,000 Da, the pore diameter of the outer surface was 17 nm, and the pore diameter of the inner surface was 1650 nm. The outer diameter was 1.30 mm and the inner diameter was 0.75 mm.

(Reference Example 5)

A membrane having a larger molecular weight cut-off was obtained by further raising the coagulation bath temperature after the polymer solution was applied to the support layer in Reference Example 1. Performance of the obtained hollow fiber membrane is shown in Table 1. The molecular weight cut-off A was 150,000 Da, the pore diameter of the outer surface was 19 nm, and the pore diameter of the inner surface was 1720 nm. The outer diameter was 1.30 mm and the inner diameter was 0.75 mm.

[Table 1]

| Parameter | Unit | Reference Example 1 | Reference Example 2 | Reference Example 3 | Reference Example 4 | Reference Example 5 |
|---|---|---|---|---|---|---|
| Molecular weight cut-off (MWCO) A | Da | 100,000 | 65,000 | 100,000 | 120,000 | 150,000 |
| Pore diameter C of inner surface | nm | 1530 | 1530 | 20 | 1650 | 1720 |
| Pore diameter D of outer surface | nm | 15 | 9 | 15 | 17 | 19 |
| C/D | - | 102 | 170 | 1.3 | 97.1 | 90.5 |

(Production of Hollow Fiber Membrane Module)

The hollow fiber membrane obtained above was cut to a length of 1,200 mm, immersed in a 30 mass% glycerin aqueous solution for 1 hour, and then air-dried. Thereafter, a filtrate outlet side end of the hollow fiber membrane was sealed with a silicone adhesive (a mixture of two agents of SH850A/B manufactured by DuPont Toray Specialty Materials K.K., at a mass ratio of 50:50).

Thereafter, as illustrated in FIG. 3, the container 1 (inner diameter: 97.6 mm, length: 1,100 mm) was filled with the above-described hollow fiber membrane 5 such that the sealed filtrate outlet side end was positioned on the filtrate outlet 3 side of the container 1. The raw liquid outlet 4 is provided on a side surface on the filtrate outlet 3 side of the container 1.

Subsequently, a first potting portion forming jig was attached to the raw liquid inlet 2 side of the container 1, and a second potting portion forming jig was attached to the filtrate outlet 3 side. A pin having a diameter of 7 mm and a length of 100 mm was inserted into the first potting portion forming jig in the same direction as the axial direction of the hollow fiber membrane in order to open a through hole for introducing the raw liquid into the raw liquid side space 6.

As a potting agent, a bisphenol F type epoxy resin (LST868-R14, manufactured by Huntsman Japan) and an aliphatic amine-based curing agent (LST868-H14, manufactured by Huntsman Japan) were mixed at a mass ratio of 100:30, and a total of 800 g of the mixture (400 g per end) was put into a potting agent injector.

Subsequently, a centrifugal molding machine was rotated, and the potting agent was injected into the first potting portion forming jig and the second potting portion forming jig at both ends to mold the first potting portion 8 and the second potting portion 9, and the potting agent was cured. The centrifugal molding machine had an inside temperature of 35°C, a rotation speed of 300 rpm, and a centrifugal time of 5 hours.

After curing, the first potting portion forming jig, the second potting portion forming jig, and the pin were removed, and after curing at room temperature for 24 hours, and the end of the second potting portion 9 was cut with a tip saw type rotary blade to open an end surface of the hollow fiber membrane 5 on the filtrate outlet side.

Subsequently, a lower cap provided with the raw liquid inlet 2 and an upper cap provided with the filtrate outlet 3 were attached to the container 1 to obtain a hollow fiber membrane module. In this case, the hollow fiber membrane had a membrane length L of 1.0 m, a filling rate M of 40%, and a membrane area of 9.2 m$^2$.

(Rejection Rate Measurement Test)

The same module as that used for measuring the molecular weight cut-off was used, and filtration was carried out using the same filtration device as the filtration unit illustrated in FIG. 1. The raw liquid was an aqueous solution containing PEG having a predetermined molecular weight and adjusted to a predetermined concentration, and the raw liquid was circulated by a pump so that the flow velocity $v_f$ of the raw liquid was 1.0 m/s at 25°C. A filtrate valve 22 was fully opened, and a concentrated liquid valve 21 was throttled to adjust a pressure. After the adjustment, sampling of the filtrate was started, and after discarding an initial 2.0 g of the filtrate, 1.5 g of the filtrate was collected. At this time, a time taken to collect 1.5 g was also measured, and a filtration flux was calculated. The raw liquid was sampled at the same time. Thereafter, the concentrated liquid valve 21 was adjusted to change the pressure, and the flux was calculated and samples were taken at five or more points until a transmembrane pressure reaches 200 kPa.

The concentration of the target component in the raw liquid and the filtrate were measured by GPC. That is, the concentration was measured from a peak area of the target component measured by GPC. When the concentration of the target component in the sample was high, the measurement was performed after the sample was diluted appropriately. The rejection rate of the target component was calculated from an obtained concentration C1 in the raw liquid and a concentration C2 in the filtrate using the following Formula (12).

$$\text{Rejection Rate} = \{(C1 - C2)/C1\} \times 100 \quad (12)$$

Note that the rejection rates shown in Tables 2 to 4 are minimum values of a plurality of rejection rates calculated at each transmembrane pressure in each Example and Comparative Example.

(Method for Calculating Critical Pressure)

The TMP and the filtration flux obtained from the above-mentioned "rejection rate measurement test" were plotted as illustrated in FIG. 2 , and then $J_{max}$ and K in Formula (5) was calculated by fitting. The critical pressure of the hollow fiber membrane was calculated from an intersection of a straight line of $J = J_{max}$ and a tangent line at TMP = 0 of the approximation obtained from Formula (5). The tangent line was obtained by differentiating Formula (5) and substituting TMP = 0. Hereinafter, the critical pressure of the hollow fiber membrane is also referred to as the "critical pressure".

(Filtration Test)

In a filtration test using the hollow fiber membrane module obtained above, the filtration unit illustrated in FIG. 1 was used. An aqueous solution containing PEG having a predetermined molecular weight and adjusted to a predetermined concentration was charged into the raw liquid tank 12 by an amount of 200 L, and the raw liquid was fed by a pump such that the flow velocity $v_f$ of the raw liquid was 1.0 m/s. The filtrate after filtration was fed to the filtrate tank 13, and all the unfiltered raw liquid was returned from the raw liquid outlet 4 to the raw liquid tank 12. The filtrate fed to the filtrate tank 13 was returned to the raw liquid tank 12 by a pump each time, and a water level of the raw liquid tank was controlled so as not to decrease. The filtration was set to be carried out at a constant pressure so that the TMP is equal to or greater than the critical pressure. Note that the TMP here was calculated by subtracting the filtrate side pressure measured by the filtrate pressure gauge 43 from an average value of a concentrated liquid pressure measured by the concentrated liquid pressure gauge 42 and a raw liquid side pressure measured by the raw liquid pressure gauge 41. In addition, the TMPout of the hollow fiber membrane 5 was calculated by subtracting the filtrate side pressure from the concentrated liquid pressure.

The filtration was continued until a ratio of the filtration flux to an initial filtration flux (hereinafter also referred to as an "initial ratio of filtration flux") became 60%, and then backwash cleaning was performed with pure water, and the flux was measured again to determine a ratio of the flux after backwash cleaning to the initial filtration flux (hereinafter also referred to as an "initial ratio flux after backwash cleaning").

(Example 1)

PEG having a weight average molecular weight B of 560,000 Da was dissolved in distilled water to a concentration of 0.7 mass% to prepare a raw liquid, and a rejection rate test was carried out using the hollow fiber membrane of Reference Example 1.

As shown in Table 2, the rejection rate was 75% when TMP was 15 kPa, which was less than the critical pressure, the rejection rate was 89% at 60 kPa, which was equal to or greater than the critical pressure, the rejection rate was 93% at 132 kPa, and the rejection rate was improved when TMP was equal to or greater than the critical pressure of the hollow fiber membrane.

(Example 2)

PEG having a weight average molecular weight B of 560,000 Da was dissolved in distilled water to a concentration of 1.0 mass% to prepare a raw liquid, and a rejection rate test was carried out using the hollow fiber membrane of Reference Example 1.

As shown in Table 2, the rejection rate was 70% when TMP was 15 kPa, which was less than the critical pressure, the rejection rate was 85% at 62 kPa, which was equal to or greater than the critical pressure, the rejection rate was 90% at 135 kPa, and the rejection rate was improved when TMP was equal to or greater than the critical pressure of the hollow fiber membrane.

(Comparative Example 1)

PEG having a weight average molecular weight B of 210,000 Da was dissolved in distilled water to a concentration of 1.0 mass% to prepare a raw liquid, and a rejection rate test was carried out using the hollow fiber membrane of Reference Example 2.

As shown in Table 2, the rejection rate was 75% when TMP was 19 kPa, which was less than the critical pressure, the rejection rate was 70% at 56 kPa, which was equal to or greater than the critical pressure, the rejection rate was 66% at 149 kPa, and the rejection rate decreases when TMP was equal to or greater than the critical pressure of the hollow fiber membrane.

(Comparative Example 2)

PEG having a weight average molecular weight B of 2,000,000 Da was dissolved in distilled water to a concentration of 0.6 mass% to prepare a raw liquid, and a rejection rate test was carried out using the hollow fiber membrane of Reference Example 2.

As shown in Table 2, the rejection rate exceeded 99% under all TMP conditions, and the filtration was not affected by TMP, but since the hollow fibers had a small molecular weight cut-off, the limiting flux was lower than in Examples 1 and 2.

[Table 2]

| Parameter | Unit | Example 1 | Example 2 | Comparative Example 1 | Comparative Example 2 |
|---|---|---|---|---|---|
| Hollow fiber membrane | - | Reference Example 1 | Reference Example 1 | Reference Example 2 | Reference Example 2 |
| Molecular weight cut-off (MWCO) A | Da | 100,000 | 100,000 | 65,000 | 65,000 |

(continued)

| Parameter | Unit | Example 1 | | | Example 2 | | | Comparative Example 1 | | | Comparative Example 2 | | |
|---|---|---|---|---|---|---|---|---|---|---|---|---|---|
| Weight average molecular weight (Mw) B | Da | 560,000 | | | 560,000 | | | 210,000 | | | 2,000,000 | | |
| A/B | - | 0.18 | | | 0.18 | | | 0.31 | | | 0.03 | | |
| Raw liquid PEG concentration | mass% | 0.7 | | | 1.0 | | | 1.0 | | | 0.6 | | |
| Raw liquid viscosity | mPa•s | 5.6 | | | 10.4 | | | 4.3 | | | 17.1 | | |
| Raw liquid flow velocity | m/s | 1.0 | | | 1.0 | | | 1.0 | | | 1.0 | | |
| Critical pressure | kPa | 33 | | | 25 | | | 32 | | | 32 | | |
| Limiting flux | L/m$^2$/h | 42 | | | 32 | | | 65 | | | 29 | | |
| Transmembrane pressure | kPa | 15 | 60 | 132 | 15 | 62 | 135 | 19 | 56 | 149 | 22 | 58 | 140 |
| Rejection rate | % | 75 | 89 | 93 | 70 | 85 | 90 | 75 | 70 | 66 | > 99 | > 99 | > 99 |

(Example 3)

PEG having a weight average molecular weight B of 560,000 Da was dissolved in distilled water to a concentration of 1.0 mass% to prepare a raw liquid, and a rejection rate test was carried out using the hollow fiber membrane of Reference Example 4.

As shown in Table 3, the rejection rate was 65% when TMP was 20 kPa, which was less than the critical pressure, the rejection rate was 73% at 64 kPa, which was equal to or greater than the critical pressure, and the rejection rate was 80% at 135 kPa. By setting TMP to be equal to or greater than the critical pressure of the hollow fiber membrane, the rejection rate was improved, although the improvement was smaller than in Example 2.

(Example 4)

PEG having a weight average molecular weight B of 560,000 Da was dissolved in distilled water to a concentration of 1.0 mass% to prepare a raw liquid, and a rejection rate test was carried out using the hollow fiber membrane of Reference Example 5.

As shown in Table 3, the rejection rate was 60% when TMP was 20 kPa, which was less than the critical pressure, the rejection rate was 66% at 62 kPa, which was equal to or greater than the critical pressure, and the rejection rate was 69% at 131 kPa. By setting TMP to be equal to or greater than the critical pressure of the hollow fiber membrane, the rejection rate was improved, although the improvement was smaller than in Examples 2 and 3.

[Table 3]

| Parameter | Unit | Example 3 | Example 4 |
|---|---|---|---|
| Hollow fiber membrane | - | Reference Example 4 | Reference Example 5 |
| Molecular weight cut-off (MWCO) A | Da | 120,000 | 150,000 |
| Weight average molecular weight (Mw) B | Da | 560,000 | 560,000 |
| A/B | - | 0.21 | 0.27 |
| Raw liquid PEG concentration | mass% | 1.0 | 1.0 |
| Raw liquid viscosity | mPa•s | 10.4 | 10.4 |
| Raw liquid flow velocity | m/s | 1.0 | 1.0 |
| Critical pressure | kPa | 36 | 40 |

(continued)

| Parameter | Unit | Example 3 | | | Example 4 | | |
|---|---|---|---|---|---|---|---|
| Limiting flux | L/m²/h | 35 | | | 40 | | |
| Transmembrane pressure | kPa | 20 | 64 | 135 | 20 | 62 | 131 |
| Rejection rate | % | 65 | 73 | 80 | 60 | 66 | 69 |

(Example 5)

PEG having a weight average molecular weight B of 560,000 Da was dissolved in distilled water to a concentration of 0.7 mass% to prepare a raw liquid, and a filtration test was carried out using a hollow fiber membrane module produced using the hollow fiber membrane of Reference Example 1. The flow velocity of the raw liquid was 1.0 m/s, and TMP was 100 kPa.

The filtration was operated until the initial ratio of filtration flux reached 60% and then the backwash cleaning was performed, and as a result, as shown in Table 4, the initial ratio flux after backwash cleaning was restored to 82%. As shown in Example 1, the critical pressure was 33 kPa, whereas during operation, the outlet side transmembrane pressure was 35 kPa, which was above the critical pressure. As a result, it is believed that operation was possible at or above the critical pressure over the longitudinal direction of the hollow fiber membrane, and the rejection rate was maintained at 91% or more.

(Example 6)

PEG having a weight average molecular weight B of 560,000 Da was dissolved in distilled water to a concentration of 0.7 mass% to prepare a raw liquid, and a filtration test was carried out using a hollow fiber membrane module produced using the hollow fiber membrane of Reference Example 3. The flow velocity of the raw liquid was 1.0 m/s, and TMP was 100 kPa.

The filtration was operated until the initial ratio of filtration flux reached 60% and then the backwash cleaning was performed, and as a result, as shown in Table 4, the initial ratio flux after backwash cleaning was restored to 66%. The critical pressure was 33 kPa, whereas during operation, the outlet side transmembrane pressure was 41 kPa, which was above the critical pressure, and the rejection rate was maintained at 91% or more. Note that since the ratio C/D of the pore diameter D of the outer surface and the pore diameter C of the inner surface was small, it was difficult to obtain the cleaning effect by the backwash cleaning, and the initial ratio flux after backwash cleaning was slightly decreased.

(Example 7)

PEG having a weight average molecular weight B of 560,000 Da was dissolved in distilled water to a concentration of 0.7 mass% to prepare a raw liquid, and a filtration test was carried out using a hollow fiber membrane module produced using the hollow fiber membrane of Reference Example 1. The flow velocity of the raw liquid was 1.5 m/s, and TMP was 100 kPa.

The filtration was operated until the initial ratio of filtration flux reached 60% and then the backwash cleaning was performed, and as a result, as shown in Table 4, the initial ratio flux after backwash cleaning was restored to 81%. The critical pressure was 37 kPa, whereas TMP was 100 kPa, which was higher than the critical pressure, but the outlet side transmembrane pressure was 2 kPa, which was lower than the critical pressure, and the rejection rate was 85%.

(Example 8)

PEG having a weight average molecular weight B of 560,000 Da was dissolved in distilled water to a concentration of 0.7 mass% to prepare a raw liquid, and a filtration test was carried out using a hollow fiber membrane module produced using the hollow fiber membrane of Reference Example 1. The flow velocity of the raw liquid was 0.25 m/s, and TMP was 150 kPa.

The filtration was operated until the initial ratio of filtration flux reached 60% and then the backwash cleaning was performed, and as a result, as shown in Table 4, the initial ratio flux after backwash cleaning was restored to only 70%. It was thought that this is because the flow velocity of the raw liquid was low, and the cleaning effect of the flow was insufficient, causing the clogging to progress. The critical pressure was 25 kPa, whereas the transmembrane pressure was 150 kPa, which was higher than the critical pressure, and the outlet side transmembrane pressure was 130 kPa, which was higher than the critical pressure, and the rejection rate was 93%.

(Example 9)

PEG having a weight average molecular weight B of 560,000 Da was dissolved in distilled water to a concentration of 0.7 mass% to prepare a raw liquid, and a filtration test was carried out using a hollow fiber membrane module produced using the hollow fiber membrane of Reference Example 1. The flow velocity of the raw liquid was 0.5 m/s, and the transmembrane pressure was 150 kPa.

The filtration was operated until the initial ratio of filtration flux reached 60% and then the backwash cleaning was performed, and as a result, as shown in Table 4, the initial ratio flux after backwash cleaning was restored to only 75%. It was thought that this is because the flow velocity of the raw liquid was low, and the cleaning effect of the flow was insufficient, causing the clogging to progress. The critical pressure was 27 kPa, whereas the transmembrane pressure was 150 kPa, which was higher than the critical pressure, and the outlet side transmembrane pressure was 91 kPa, which was higher than the critical pressure, and the rejection rate was 91%.

[Table 4]

| Parameter | Unit | Example 5 | Example 6 | Example 7 | Example 8 | Example 9 |
|---|---|---|---|---|---|---|
| Hollow fiber membrane | - | Reference Example 1 | Reference Example 3 | Reference Example 1 | Reference Example 1 | Reference Example 1 |
| Molecular weight cut-off (MWCO) A | Da | 100,000 | 100,000 | 100,000 | 100,000 | 100,000 |
| Weight average molecular weight (Mw) B | Da | 560,000 | 560,000 | 560,000 | 560,000 | 560,000 |
| A/B | - | 0.18 | 0.18 | 0.18 | 0.18 | 0.18 |
| Pore diameter C of inner surface | nm | 1530 | 20 | 1530 | 1530 | 1530 |
| Pore diameter D of outer surface | nm | 15 | 15 | 15 | 15 | 15 |
| C/D | - | 102.0 | 1.3 | 102.0 | 102.0 | 102.0 |
| Raw liquid PEG concentration | mass% | 0.7 | 0.7 | 0.7 | 0.7 | 0.7 |
| Raw liquid viscosity | mPa•s | 5.6 | 5.6 | 5.6 | 5.6 | 5.6 |
| Filtrate viscosity | mPa•s | 1.1 | 1.1 | 1.1 | 1.1 | 1.1 |
| Flow velocity $v_f$ of Raw liquid | m/s | 1.0 | 1.0 | 1.5 | 0.25 | 0.5 |
| Initial filtration flux | L/m$^2$/h | 35 | 35 | 5 | 33 | 33 |
| Flow velocity $v_p$ of filtrate | m/s | 0.09 | 0.09 | 0.01 | 0.08 | 0.08 |
| $v_p/v_f$ | - | 0.09 | 0.09 | 0.01 | 0.34 | 0.17 |
| Critical pressure | kPa | 33 | 33 | 37 | 25 | 27 |
| Transmembrane pressure | kPa | 100 | 100 | 100 | 150 | 150 |
| Transmembrane pressure on filtrate outlet side | kPa | 35 | 41 | 2 | 130 | 117 |
| Rejection rate | % | 91 | 91 | 85 | 93 | 91 |
| Initial ratio flux after backwash cleaning | % | 82 | 66 | 81 | 70 | 75 |

Although the present invention has been described in detail with reference to specific embodiments, it is apparent to those skilled in the art that various changes and modifications can be made without departing from the spirit and scope of the present invention. The present application is based on Japanese Patent Application No. 2022-210709 filed on December 27, 2022, and the content thereof is incorporated herein by reference. All references cited herein are incorporated as a whole.

INDUSTRIAL APPLICABILITY

The method for producing a concentrated liquid of a raw liquid of the present invention is preferably applied to concentration of a raw liquid in a fermentation field involving culture of microorganisms and cultured cells, a pharmaceutical field, a food and drink field, or the like, in addition to a water treatment field such as drinking water production, water purification treatment, and wastewater treatment.

REFERENCE SIGNS LIST

    1 container
    2 raw liquid inlet
    3 filtrate outlet
    4 raw liquid outlet
    5 hollow fiber membrane
    6 raw liquid side space
    7 filtrate side space
    8 first potting portion
    9 second potting portion
    10 hollow fiber membrane module
    12 raw liquid tank
    13 filtrate tank
    14 supply pump
    15 constant-temperature water bath
    16 fine tube
    21 concentrated liquid valve
    22 filtrate valve
    31 concentrated liquid flowmeter
    32 filtrate flowmeter
    41 raw liquid pressure gauge
    42 concentrated liquid pressure gauge
    43 filtrate pressure gauge
    45 tube inlet pressure gauge
    46 tube outlet pressure gauge
    51 raw liquid thermometer

**Claims**

1. A method for producing a concentrated liquid of a raw liquid using an ultrafiltration membrane, the method comprising:
   filtering the raw liquid through the ultrafiltration membrane at a transmembrane pressure equal to or higher than a critical pressure of the ultrafiltration membrane when A/B is 0.05 or more and 0.30 or less, provided that A is a molecular weight cut-off (MWCO) of the ultrafiltration membrane and B is a weight average molecular weight (Mw) of a solute in the raw liquid.

2. The method for producing a concentrated liquid according to claim 1, wherein
   the weight average molecular weight (Mw) B of the solute in the raw liquid is a weight average molecular weight of a component having a molecular weight of 1,000 Da or more.

3. The method for producing a concentrated liquid according to claim 1 or 2, wherein
   a concentration of the solute in the raw liquid is 0.1 mass% or more.

4. The method for producing a concentrated liquid according to claim 2, wherein
the weight average molecular weight (Mw) B of the solute in the raw liquid is 30,000 Da or more and 1,000,000 Da or less.

5. The method for producing a concentrated liquid according to claim 1 or 2, wherein
the molecular weight cut-off (MWCO) A of the ultrafiltration membrane is 5,000 Da or more and 300,000 Da or less, and the filtration is performed at a transmembrane pressure of 50 kPa or more and 200 kPa or less.

6. The method for producing a concentrated liquid according to claim 1 or 2, wherein
the ultrafiltration membrane is an external pressure type hollow fiber membrane whose outer surface is in contact with the raw liquid.

7. The method for producing a concentrated liquid according to claim 6, wherein

an effective length of a hollow fiber membrane module is 0.5 m or more and 1.5 m or less as a length of the hollow fiber membrane, and
when the hollow fiber membrane is loaded in the hollow fiber membrane module, a transmembrane pressure at a filtrate outlet side end of the hollow fiber membrane module is equal to or greater than the critical pressure of the ultrafiltration membrane.

8. The method for producing a concentrated liquid according to claim 6, wherein

the filtration is cross flow filtration, and
when a ratio of a viscosity $\mu_f$ of the raw liquid to a viscosity $\mu_p$ of a filtrate after the raw liquid is filtered satisfies $\mu_f/\mu_p \geq 1.5$, the filtration is operated such that a flow velocity ratio of a flow velocity $v_p$ of the filtrate to a flow velocity $v_f$ of the raw liquid satisfies $0.02 \leq v_p/v_f \leq 0.30$.

9. The method for producing a concentrated liquid according to claim 6, wherein

a pore diameter D of the outer surface of the hollow fiber membrane is 5 nm or more and 20 nm or less, and
a ratio C/D of a pore diameter C of an inner surface of the hollow fiber membrane to the pore diameter D of the outer surface is greater than 50.

## FIG. 1

## FIG. 2

FIG. 3

FIG. 4

## INTERNATIONAL SEARCH REPORT

| International application No. |
|---|
| **PCT/JP2023/046654** |

**A. CLASSIFICATION OF SUBJECT MATTER**

***B01D 61/22***(2006.01)i; ***B01D 61/14***(2006.01)i; ***B01D 63/02***(2006.01)i; ***B01D 69/00***(2006.01)i; ***B01D 69/02***(2006.01)i; ***B01D 69/08***(2006.01)i

FI: B01D61/22; B01D63/02; B01D69/08; B01D69/00; B01D69/02; B01D61/14 500

According to International Patent Classification (IPC) or to both national classification and IPC

**B. FIELDS SEARCHED**

Minimum documentation searched (classification system followed by classification symbols)

B01D61/22; B01D61/14; B01D63/02; B01D69/00; B01D69/02; B01D69/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-110693 A (TORAY INDUSTRIES, INC.) 20 May 2010 (2010-05-20) paragraphs [0034]-[0036], [0055]-[0070] | 1-6 |
| A | | 7-9 |
| A | WO 2005/070954 A1 (TORAY INDUSTRIES, INC.) 04 August 2005 (2005-08-04) claims 1-5 | 1-9 |
| A | JP 11-508813 A (QUANTIC BIOMEDICAL PARTNERS) 03 August 1999 (1999-08-03) claims 1-26 | 1-9 |

☐ Further documents are listed in the continuation of Box C.    ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 March 2024** | **19 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

INTERNATIONAL SEARCH REPORT
Information on patent family members

| International application No. |
| --- |
| **PCT/JP2023/046654** |

| Patent document cited in search report | | | Publication date (day/month/year) | Patent family member(s) | | | Publication date (day/month/year) |
| --- | --- | --- | --- | --- | --- | --- | --- |
| JP | 2010-110693 | A | 20 May 2010 | (Family: none) | | | |
| WO | 2005/070954 | A1 | 04 August 2005 | US | 2007/0244306 | A1 | |
| | | | | claims 1-5 | | | |
| | | | | EP | 1707573 | A1 | |
| | | | | CN | 1934129 | A | |
| | | | | KR 10-2007-0001927 | | A | |
| JP | 11-508813 | A | 03 August 1999 | US | 6010627 | A | |
| | | | | claims 1-7 | | | |
| | | | | EP | 836487 | A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018103119 A
- JP 2022054198 A
- JP 2022210709 A

**Non-patent literature cited in the description**

- Membrane Science Experimental Methods - Artificial Membranes. Membrane Society of Japan, 2006